# EUROPEAN PATENT SPECIFICATION

(11) **EP 4 321 358 B1**
(45) Date of publication and mention of the grant of the patent: **22.07.2026**
(21) Application number: 22784546.8
(22) Date of filing: 25.03.2022
(51) Int. Cl.: F25B 41/20, F25B 41/42, B60H 1/00, F16K 31/06, F16K 31/40, F25B 5/02, F25B 5/04

(54) **VALVE DEVICE AND AIR CONDITIONING DEVICE**
VENTILVORRICHTUNG UND KLIMATISIERUNGSVORRICHTUNG
DISPOSITIF DE SOUPAPE ET DISPOSITIF DE CLIMATISATION

(30) Priority: 09.04.2021 JP 2021066804
(43) Date of publication of application: 14.02.2024
(73) Proprietor: Fujikoki Corporation, Tokyo 158-0082 (JP)
(72) Inventor: ARAI, Yusuke, Tokyo 158-0082 (JP); ASANO, Hisashi, Tokyo 158-0082 (JP); KATO, Shinsuke, Tokyo 158-0082 (JP); ITOH, Masaharu, Tokyo 158-0082 (JP)
(74) Representative: Ter Meer Steinmeister & Partner
(86) International application number: PCT/JP2022/014736
(87) International publication number: WO 2022/215561

(56) References cited:
- CN-U- 211 204 496
- JP-A- 2015 077 816
- JP-A- 2020 034 178
- JP-A- 2021 047 000
- JP-A- 2021 047 000
- US-A- 5 845 511

## Description

### Technical Field

The present invention relates to a valve device and an air conditioning device.

### Background Art

Patent Literature 1 discloses an example of a vehicle air conditioning device according to the related art. The vehicle air conditioning device in Patent Literature 1 includes a compressor, an indoor condenser, an outdoor heat exchanger, an indoor evaporator, an accumulator, a first expansion valve, a second expansion valve, a first on-off valve, a second on-off valve, and a check valve. The vehicle air conditioning device further includes a first refrigerant passage, a second refrigerant passage, a third refrigerant passage, and a bypass passage.

The compressor includes a discharge port that is connected to an inlet of the indoor condenser. The first refrigerant passage connects an outlet of the indoor condenser to an inlet of the outdoor heat exchanger. The second refrigerant passage connects an outlet of the outdoor heat exchanger to an inlet of the accumulator. The third refrigerant passage connects the outlet of the outdoor heat exchanger to an inlet of the indoor evaporator. The indoor evaporator includes an outlet that is connected to the inlet of the accumulator. The accumulator includes an outlet that is connected to a suction port of the compressor.

The first expansion valve can change the passage area of the first refrigerant passage. The first on-off valve can open and close the second refrigerant passage. The second expansion valve can change the passage area of the third refrigerant passage. The check valve is disposed between the outlet of the outdoor heat exchanger and the second expansion valve in the third refrigerant passage. The check valve allows refrigerant to flow from the outlet of the outdoor heat exchanger to the second expansion valve. The check valve restricts refrigerant from flowing from the second expansion valve to the outlet of the outdoor heat exchanger.

The bypass passage connects a first point in the first refrigerant passage to a second point in the third refrigerant passage, the first point is between the outlet of the indoor condenser and the first expansion valve, and the second point is between the check valve and the second expansion valve. The second on-off valve can open and close the bypass passage.

CN 211204496 U discloses a fluid control integrated module and heat pump system, the fluid control integrated module comprising a gas liquid separator, the gas liquid separator comprising a cylinder body and an integrated block arranged on the cylinder body, the integrated block being further provided with a first connector and a second connector, a valve body channel communicated with the first connector and the gas liquid inlet is formed in the integrated block, and a first channel communicated with the second connector and the gas liquid inlet is formed in the integrated block. The one way valve is arranged in the valve body channel, and the first electromagnetic valve is fixed on the integrated block.

### Citation List

### Patent Literature

Patent Literature 1: Japanese Unexamined Patent Application Publication No. 2015-77816

### Summary of Invention

### Technical Problem

The vehicle air conditioning device has a configuration in which the first on-off valve is connected to pipes via connectors. In the configuration, the first expansion valve, the second on-off valve, and the check valve are also connected to pipes and the like via connectors. This increases the number of connecting points in the vehicle air conditioning device, resulting in a higher possibility of refrigerant leakage. Additionally, the vehicle air conditioning device includes connectors, thereby necessitating additional components, additional manufacturing processes, and additional manufacturing costs.

Accordingly, it is an object of the present invention to provide a valve device with fewer components capable of suppressing refrigerant leakage, and an air conditioning device including the valve device.

### Solution to Problem

The scope of the invention is defined in the appended claims.

To achieve the object described above, a valve device according to an aspect of the present invention as claimed in claim 1, includes a valve body including refrigerant passages, and valve units mounted on the valve body. The refrigerant passages include a main high-pressure-refrigerant passage, a first branch high-pressure-refrigerant passage that is connected to the main high-pressure-refrigerant passage, a second branch high-pressure-refrigerant passage that is connected to the main high-pressure-refrigerant passage, a main low-pressure-refrigerant passage, a first branch low-pressure-refrigerant passage that is connected to the main low-pressure-refrigerant passage, and a second branch low-pressure-refrigerant passage that is connected to the main low-pressure-refrigerant passage. The valve units include a high-pressure flow control valve unit configured to change a passage area of the first branch high-pressure-refrigerant passage, a high-pressure on-off valve unit configured to open and close the second branch high-pressure-refrigerant passage, a low-pressure flow control valve unit configured to change a passage area of the first branch low-pressure-refrigerant passage, a low-pressure on-off valve unit configured to open and close the second branch low-pressure-refrigerant passage, and a check valve unit that is disposed at a point in the first branch low-pressure-refrigerant passage, the point being nearer the main low-pressure-refrigerant passage than the low-pressure flow control valve unit is. The check valve unit allows refrigerant to flow from the main low-pressure-refrigerant passage to the low-pressure flow control valve unit and restricts refrigerant from flowing from the low-pressure flow control valve unit to the main low-pressure-refrigerant passage. The second branch high-pressure-refrigerant passage connects the main high-pressure-refrigerant passage to a point in the first branch low-pressure-refrigerant passage, the point being between the check valve unit and the low-pressure flow control valve unit.

In the present invention, the refrigerant passages include a pressure control refrigerant passage. The valve units include a pressure control valve unit that is disposed in the pressure control refrigerant passage. The pressure control refrigerant passage includes a first end that is connected to a point in the second branch low-pressure-refrigerant passage, the point being further from the main low-pressure-refrigerant passage than the low-pressure on-off valve unit is. The pressure control valve unit maintains pressure of refrigerant at a second end of the pressure control refrigerant passage at a set value or higher.

In the present invention, preferably, the valve device further includes an accumulator that is mounted on the valve body and that separates refrigerant into gas and liquid phases. Preferably, the accumulator includes an inlet that is connected to a point in the second branch low-pressure-refrigerant passage, the point being further from the main low-pressure-refrigerant passage than the low-pressure on-off valve unit is.

According to another aspect of the present invention as defined in claim 3, the valve body includes front and back surfaces parallel to each other, left and right surfaces parallel to each other, and upper and bottom surfaces parallel to each other. The left surface is at a right angle to the front surface. The upper surface is at a right angle to the front surface and is at a right angle to the left surface. The high-pressure flow control valve unit, the low-pressure flow control valve unit, and the low-pressure on-off valve unit are disposed on the upper surface. The high-pressure on-off valve unit is disposed on the left surface. The front surface includes a first outdoor-side opening that is connected to the main low-pressure-refrigerant passage, and a second outdoor-side opening that is connected to a point in the first branch high-pressure-refrigerant passage, the point being further from the main high-pressure-refrigerant passage than the high-pressure flow control valve unit is. The back surface includes a first indoor-side opening that is connected to the main high-pressure-refrigerant passage, and a second indoor-side opening that is connected to a point in the first branch low-pressure-refrigerant passage, the point being further from the main low-pressure-refrigerant passage than the low-pressure flow control valve unit is. The left surface or the bottom surface includes a refrigerant return opening that is connected to a point in the second branch low-pressure-refrigerant passage, the point being further from the main low-pressure-refrigerant passage than the low-pressure on-off valve unit is.

In the present invention, the valve body includes front and back surfaces parallel to each other, left and right surfaces parallel to each other, and upper and bottom surfaces parallel to each other. The left surface is at a right angle to the front surface. The upper surface is at a right angle to the front surface and is at a right angle to the left surface. The high-pressure flow control valve unit, the low-pressure flow control valve unit, and the low-pressure on-off valve unit are disposed on the upper surface. Preferably, the high-pressure on-off valve unit is disposed on the left surface. Preferably, the front surface includes a first outdoor-side opening that is connected to the main low-pressure-refrigerant passage, and a second outdoor-side opening that is connected to a point in the first branch high-pressure-refrigerant passage, the point being further from the main high-pressure-refrigerant passage than the high-pressure flow control valve unit is. Preferably, the back surface includes a first indoor-side opening that is connected to the main high-pressure-refrigerant passage, a second indoor-side opening that is connected to a point in the first branch low-pressure-refrigerant passage, and a third indoor-side opening that is connected to the second end of the pressure control refrigerant passage, the point being further from the main low-pressure-refrigerant passage than the low-pressure flow control valve unit is. Preferably, the left surface or the bottom surface includes a refrigerant return opening that is connected to a point in the second branch low-pressure-refrigerant passage, the point being further from the main low-pressure-refrigerant passage than the low-pressure on-off valve unit is.

To achieve the object described above, an air conditioning device according to still another aspect of the present invention according to claim 5 includes a compressor, an indoor condenser, an outdoor heat exchanger, an indoor evaporator, an accumulator, and the valve device. The compressor includes a discharge port that is connected to an inlet of the indoor condenser, and the compressor further includes a suction port that is connected to an outlet of the accumulator. The first outdoor-side opening is connected to an outlet of the outdoor heat exchanger. The second outdoor-side opening is connected to an inlet of the outdoor heat exchanger. The first indoor-side opening is connected to an outlet of the indoor condenser. The second indoor-side opening is connected to an inlet of the indoor evaporator. The refrigerant return opening is connected to an inlet of the accumulator.

To achieve the object described above, an air conditioning device according to still another aspect of the present invention according to claim 6 includes a compressor, an indoor condenser, an outdoor heat exchanger, an indoor evaporator, an accumulator, and the valve device. The compressor includes a discharge port that is connected to an inlet of the indoor condenser, and the compressor further includes a suction port that is connected to an outlet of the accumulator. The first outdoor-side opening is connected to an outlet of the outdoor heat exchanger. The second outdoor-side opening is connected to an inlet of the outdoor heat exchanger. The first indoor-side opening is connected to an outlet of the indoor condenser. The second indoor-side opening is connected to an inlet of the indoor evaporator. The third indoor-side opening is connected to an outlet of the indoor evaporator. The refrigerant return opening is connected to an inlet of the accumulator. Advantageous Effects of Invention

The valve device and air conditioning device according to the present invention each include the valve body including the refrigerant passages, and the valve units mounted on the valve body. The refrigerant passages include the main refrigerant passage, the first branch refrigerant passages that is connected to the main refrigerant passage, and the second branch refrigerant passage that is connected to the main refrigerant passage. The valve units include the first valve unit configured to change the passage area of the first branch refrigerant passage and the second valve unit configured to change the passage area of the second branch refrigerant passage. With this configuration, the first and second branch refrigerant passages are connected to the main refrigerant passage in the valve body, and the refrigerant passages can be opened and closed or refrigerant flow rates in the refrigerant passages can be controlled by changing the passage areas of the first and second branch refrigerant passages by the first and second valve units mounted on the valve body. This enables refrigerant leakage at a point of connecting the refrigerant passages each other and at a point of connecting the valve units to the refrigerant passages to be suppressed and enables the number of connecting components to be reduced.

### Brief Description of Drawings

[Fig. 1] Fig. 1 is a diagram illustrating a schematic configuration of an air conditioning device according to a first embodiment of the present invention.
[Fig. 2] Fig. 2 is a diagram illustrating a flow of refrigerant of the air conditioning device in Fig. 1 in a cooling operation mode.
[Fig. 3] Fig. 3 is a diagram illustrating a flow of refrigerant of the air conditioning device in Fig. 1 in a heating operation mode.
[Fig. 4] Fig. 4 is a diagram illustrating a flow of refrigerant of the air conditioning device in Fig. 1 in a first dehumidification heating operation mode.
[Fig. 5] Fig. 5 is a diagram illustrating a flow of refrigerant of the air conditioning device in Fig. 1 in a second dehumidification heating operation mode.
[Fig. 6] Fig. 6 is a perspective view of a valve device of the air conditioning device in Fig. 1.
[Fig. 7] Fig. 7 is a front view of the valve device in Fig. 6.
[Fig. 8] Fig. 8 is a left-side view of the valve device in Fig. 6.
[Fig. 9] Fig. 9 is a right-side view of the valve device in Fig. 6.
[Fig. 10] Fig. 10 is a plan view of the valve device in Fig. 6.
[Fig. 11] Fig. 11 is a bottom view of the valve device in Fig. 6.
[Fig. 12] Fig. 12 is a back view of the valve device in Fig. 6.
[Fig. 13] Fig. 13 is a sectional view taken along line A1-A1 of Fig. 8.
[Fig. 14] Fig. 14 is a sectional view taken along line B1-B1 of Fig. 8.
[Fig. 15] Fig. 15 is a sectional view taken along line C1-C1 of Fig. 8.
[Fig. 16] Fig. 16 is a sectional view taken along line D1-D1 of Fig. 7.
[Fig. 17] Fig. 17 is a sectional view taken along line E1-E1 of Fig. 7.
[Fig. 18] Fig. 18 is a sectional view taken along line F1-F1 of Fig. 7.
[Fig. 19] Fig. 19 is a sectional view taken along line G1-G1 of Fig. 7.
[Fig. 20] Fig. 20 is a sectional view of a high-pressure flow control valve unit of the valve device in Fig. 6.
[Fig. 21] Fig. 21 is a sectional view illustrating a configuration of a modification of the high-pressure flow control valve unit in Fig. 20.
[Fig. 22] Fig. 22 is a sectional view of a high-pressure on-off valve unit of the valve device in Fig. 6.
[Fig. 23] Fig. 23 is a sectional view of a low-pressure on-off valve unit of the valve device in Fig. 6.
[Fig. 24] Fig. 24 is a diagram illustrating a schematic configuration of an air conditioning device according to a second embodiment of the present invention.
[Fig. 25] Fig. 25 is a perspective view of a valve device of the air conditioning device in Fig. 24.
[Fig. 26] Fig. 26 is a front view of the valve device in Fig. 25.
[Fig. 27] Fig. 27 is a left-side view of the valve device in Fig. 25.
[Fig. 28] Fig. 28 is a right-side view of the valve device in Fig. 25.
[Fig. 29] Fig. 29 is a plan view of the valve device in Fig. 25.
[Fig. 30] Fig. 30 is a bottom view of the valve device in Fig. 25.
[Fig. 31] Fig. 31 is a back view of the valve device in Fig. 25.
[Fig. 32] Fig. 32 is a sectional view taken along line A2-A2 of Fig. 27.
[Fig. 33] Fig. 33 is a sectional view taken along line B2-B2 of Fig. 27.
[Fig. 34] Fig. 34 is a sectional view taken along line C2-C2 of Fig. 27.
[Fig. 35] Fig. 35 is a sectional view taken along line D2-D2 of Fig. 26.
[Fig. 36] Fig. 36 is a sectional view taken along line E2-E2 of Fig. 26.
[Fig. 37] Fig. 37 is a sectional view taken along line F2-F2 of Fig. 26.
[Fig. 38] Fig. 38 is a sectional view taken along line G2-G2 of Fig. 26.
[Fig. 39] Fig. 39 is a sectional view taken along line H2-H2 of Fig. 26.
[Fig. 40] Fig. 40 is a sectional view taken along line J2-J2 of Fig. 26.
[Fig. 41] Fig. 41 is a perspective view illustrating a configuration of a modification of the valve device in Fig. 25.
[Fig. 42] Fig. 42 is a left-side view of the valve device in Fig. 41.
[Fig. 43] Fig. 43 is a perspective view of a valve device according to a third embodiment not according to the present invention.
[Fig. 44] Fig. 44 is another perspective view of the valve device in Fig. 43.
[Fig. 45] Fig. 45 is a front view of the valve device in Fig. 43.
[Fig. 46] Fig. 46 is a plan view of the valve device in Fig. 43.
[Fig. 47] Fig. 47 is a sectional view taken along line A3-A3 of Fig. 46.
[Fig. 48] Fig. 48 is a sectional view taken along line B3-B3 of Fig. 45.

### Description of Embodiments

### (First Embodiment)

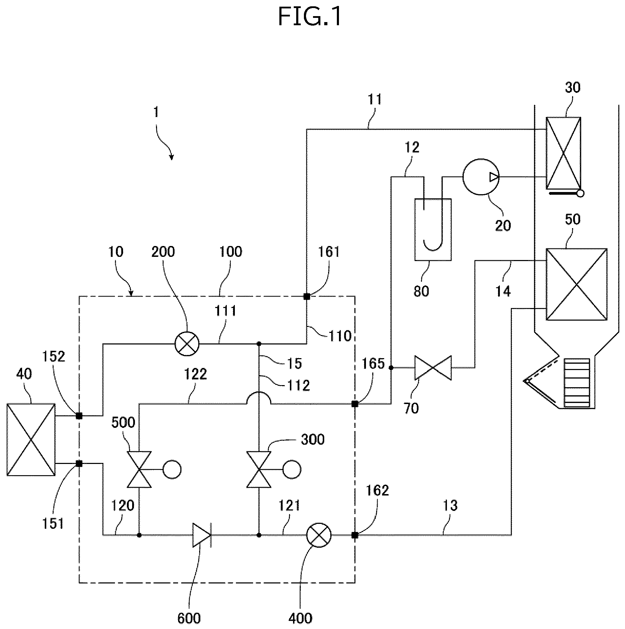

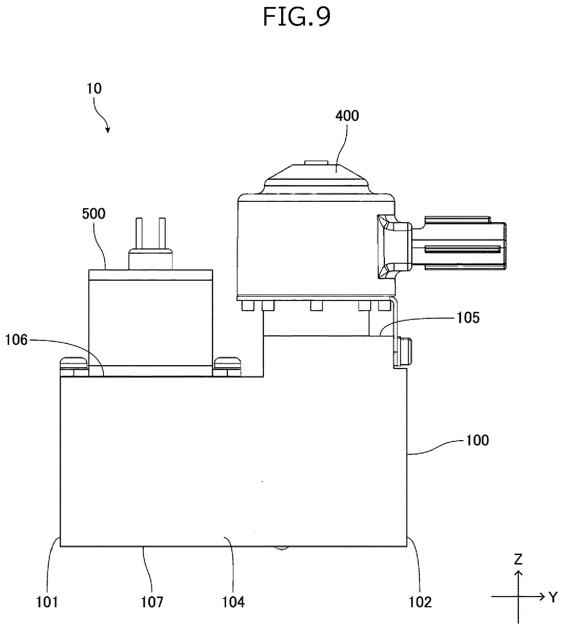

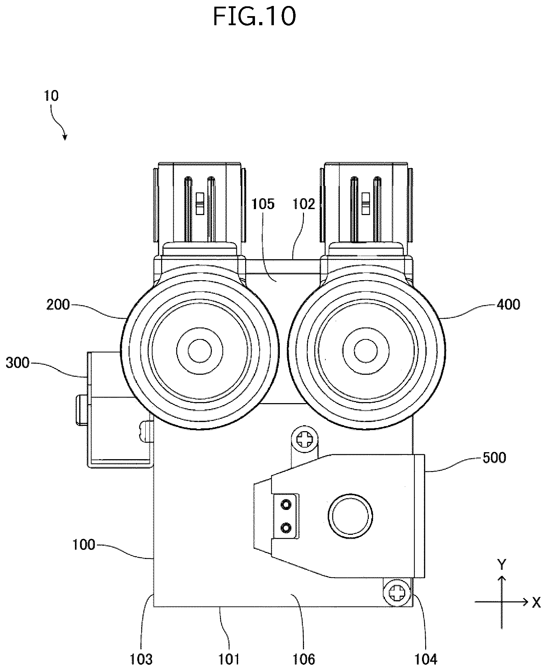

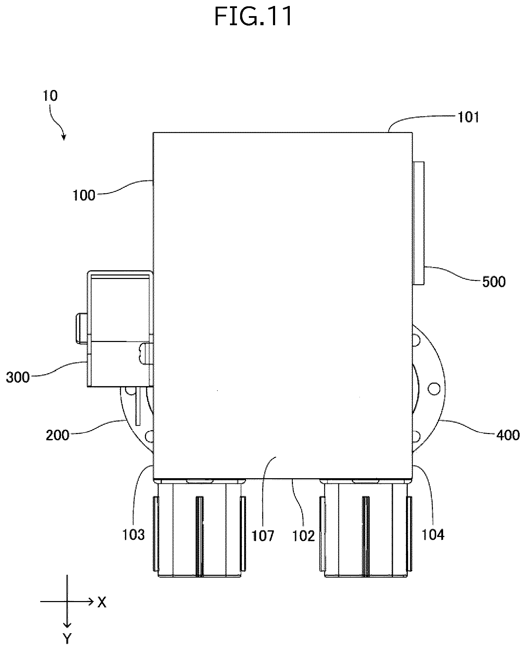

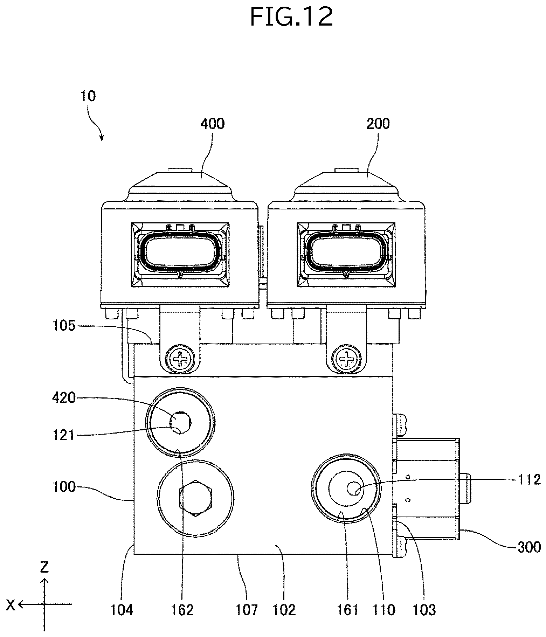

An air conditioning device according to a first embodiment of the present invention is described below with reference to Fig. 1 to Fig. 23.

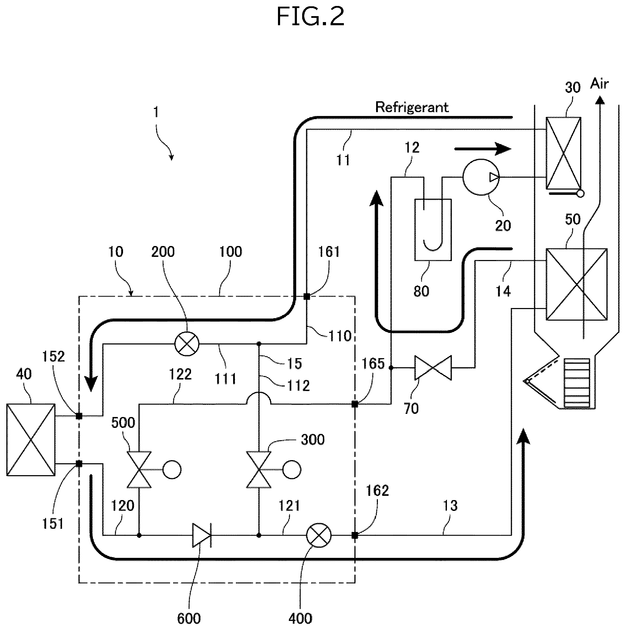

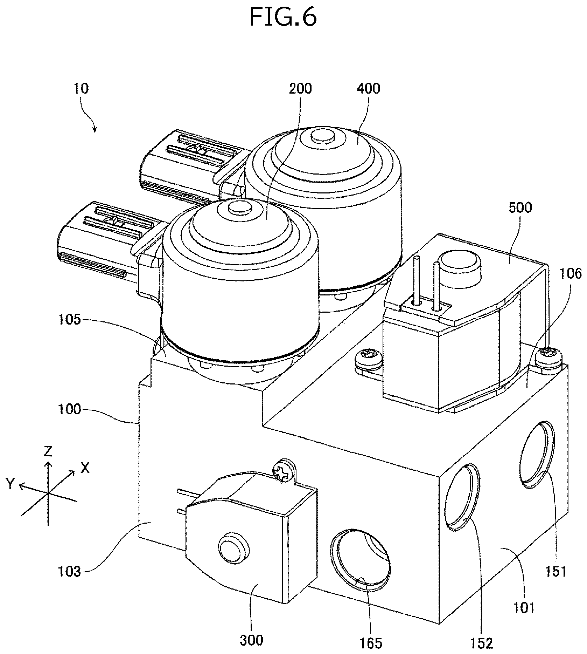

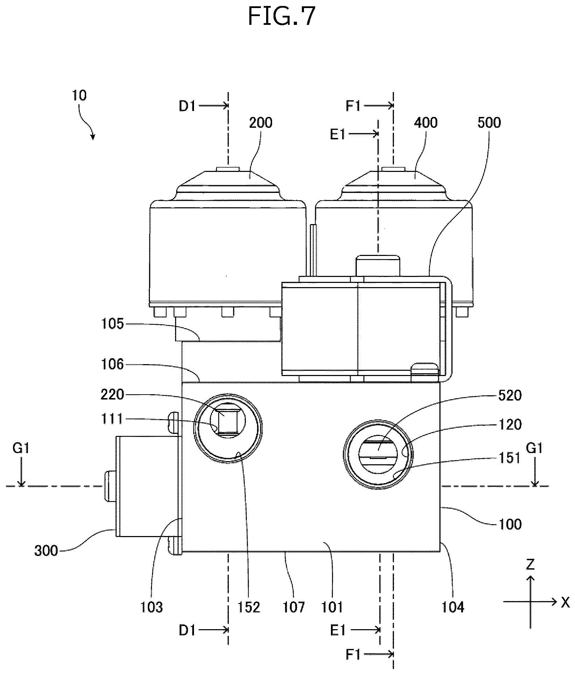

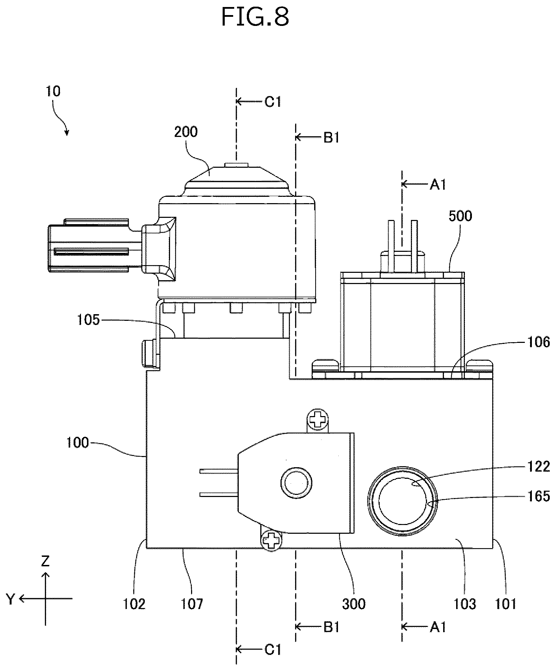

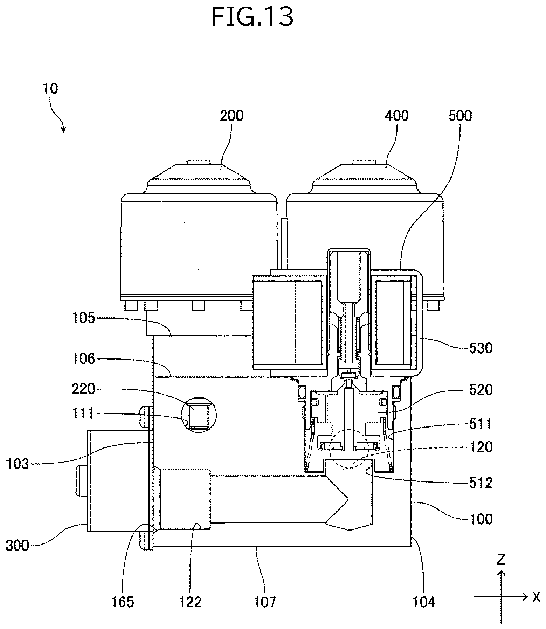

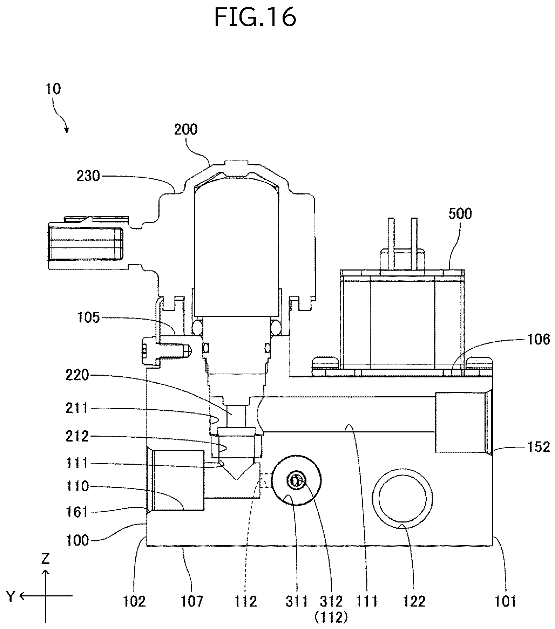

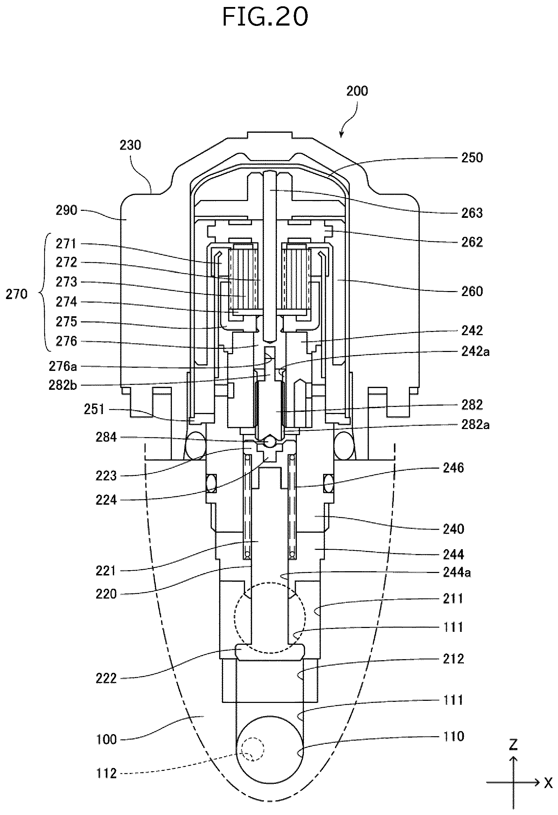

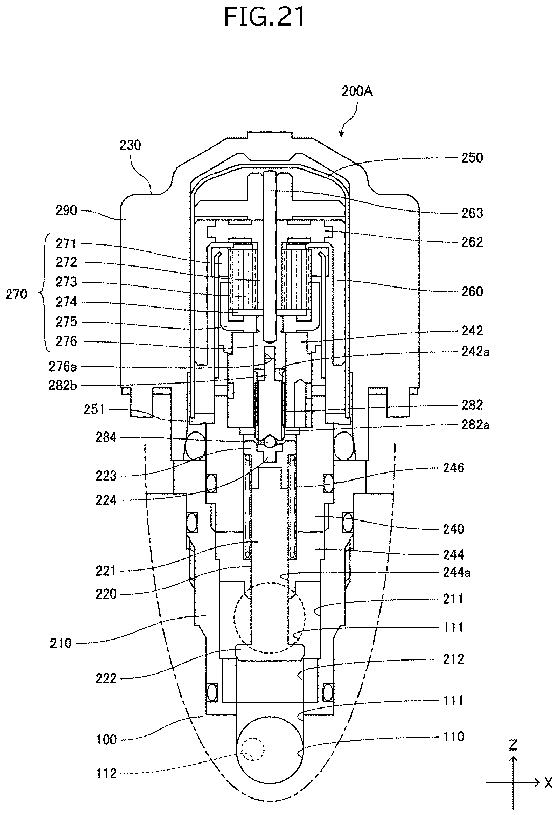

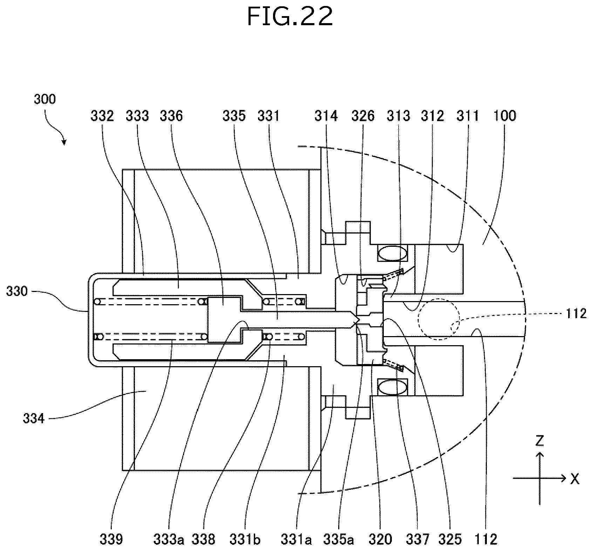

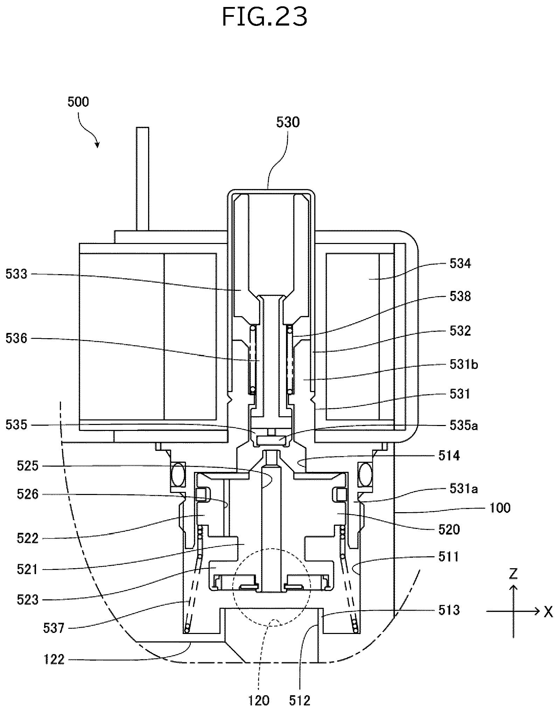

Fig. 1 is a diagram illustrating a schematic configuration of the air conditioning device according to the first embodiment of the present invention. Fig. 2 to Fig. 5 are diagrams illustrating flows of refrigerant of the air conditioning device in Fig. 1. Fig. 2 to Fig. 5 illustrate the flows of refrigerant in a cooling operation mode, a heating operation mode, a first dehumidification heating operation mode, and a second dehumidification heating operation mode. Fig. 6 to Fig. 12 are a perspective view, a front view, a left-side view, a right-side view, a plan view, a bottom view, and a back view of a valve device of the air conditioning device in Fig. 1. Fig. 13 to Fig. 15 are a sectional view taken along line A1-A1, a sectional view taken along line B1-B1, and a sectional view taken along line C1-C1 of Fig. 8. Fig. 16 to Fig. 19 are a sectional view taken along line D1-D1, a sectional view taken along line E1-E1, a sectional view taken along line F1-F1, and a sectional view taken along line G1-G1 of Fig. 7. Fig. 20 is a sectional view of a high-pressure flow control valve unit of the valve device in Fig. 6. Fig. 21 is a sectional view illustrating a configuration of a modification of the high-pressure flow control valve unit in Fig. 20. Fig. 22 is a sectional view of a high-pressure on-off valve unit of the valve device in Fig. 6. Fig. 23 is a sectional view of a low-pressure on-off valve unit of the valve device in Fig. 6. In each figure, an X direction indicated by arrow X represents a left-and-right direction (lateral direction), a Y direction indicated by arrow Y represents a front-and-back direction, and a Z direction indicated by arrow Z represents an up-and-down direction. The direction with the letter "X" on arrow X represents the right direction, the direction with the letter "Y" on arrow Y represents the backward direction, and the direction with the letter "Z" on arrow Z represents the upward direction.

An air conditioning device 1 according to the first embodiment is, for example, a vehicle air conditioning device installed in a vehicle for heating and cooling air blown into the cabin of the vehicle.

As illustrated in Fig. 1, the air conditioning device 1 includes a valve device 10, a compressor 20, an indoor condenser 30, an outdoor heat exchanger 40, an indoor evaporator 50, a pressure control valve 70, and an accumulator 80. The air conditioning device 1 further includes a first refrigerant passage 11, a second refrigerant passage 12, a third refrigerant passage 13, a fourth refrigerant passage 14, and a bypass passage 15.

The compressor 20 sucks and compresses refrigerant, and the compressor 20 discharges refrigerant in a high-temperature and high-pressure state. The compressor 20 includes a discharge port that is connected to an inlet of the indoor condenser 30. The indoor condenser 30 emits heat of refrigerant discharged by the compressor 20. The indoor condenser 30 heats air blown into the cabin of the vehicle. The first refrigerant passage 11 connects an outlet of the indoor condenser 30 to an inlet of the outdoor heat exchanger 40. Refrigerant flows inside the outdoor heat exchanger 40, and heat exchange occurs between refrigerant inside and air outside the outdoor heat exchanger 40. The second refrigerant passage 12 connects an outlet of the outdoor heat exchanger 40 to an inlet of the accumulator 80. Refrigerant flows into the inlet of the accumulator 80, and the accumulator 80 separates refrigerant into gas and liquid phases. Refrigerant in a gas phase flows out from an outlet of the accumulator 80. The outlet of the accumulator 80 is connected to a suction port of the compressor 20. Refrigerant in a gas phase flows from the accumulator 80 to the compressor 20. The third refrigerant passage 13 connects the outlet of the outdoor heat exchanger 40 to an inlet of the indoor evaporator 50. Refrigerant flows inside the indoor evaporator 50, and heat exchange occurs between refrigerant inside the indoor evaporator 50 and air blown into the cabin of the vehicle. The indoor evaporator 50 cools air blown into the cabin of the vehicle. The fourth refrigerant passage 14 connects an outlet of the indoor evaporator 50 to the inlet of the accumulator 80. The pressure control valve 70 is disposed in the fourth refrigerant passage 14. The pressure control valve 70 is configured to maintain pressure of refrigerant inside the indoor evaporator 50 at a set value or higher. The pressure control valve 70 inhibits pressure of refrigerant inside the indoor evaporator 50 from being lower than the set value in the cooling operation mode and the dehumidification heating operation modes. The set value is a pressure value set to inhibit the indoor evaporator 50 from being frosted. The bypass passage 15 is provided in the valve device 10. The bypass passage 15 connects the first refrigerant passage 11 to the third refrigerant passage 13.

The valve device 10 opens and closes the first refrigerant passage 11, the second refrigerant passage 12, the third refrigerant passage 13, and the bypass passage 15 to form refrigerant circuits corresponding to the operation modes. Additionally, the valve device 10 controls the flow rate of refrigerant flowing through the first refrigerant passage 11 and the flow rate of refrigerant flowing through the third refrigerant passage 13.

As illustrated in Fig. 6 to Fig. 19, the valve device 10 includes a valve body 100, a high-pressure flow control valve unit 200, a high-pressure on-off valve unit 300, a low-pressure flow control valve unit 400, a low-pressure on-off valve unit 500, and a check valve unit 600.

The valve body 100 is formed, for example, by extruding an aluminum alloy. The valve body 100 includes a front surface 101, a back surface 102, a left surface 103, a right surface 104, a first upper surface 105, a second upper surface 106, and a bottom surface 107. Each surface is flat. The front surface 101 and the back surface 102 are parallel to each other. The left surface 103 and the right surface 104 are parallel to each other. The left surface 103 is at a right angle to the front surface 101. The first upper surface 105, the second upper surface 106, and the bottom surface 107 are parallel to each other. The first upper surface 105 is at a right angle to the front surface 101 and is at a right angle to the left surface 103. The first upper surface 105 is disposed near the back surface 102. The second upper surface 106 is disposed near the front surface 101. The valve body 100 may include one flat upper surface instead of the first upper surface 105 and the second upper surface 106.

The front surface 101 includes a first outdoor-side opening 151 and a second outdoor-side opening 152. The back surface 102 includes a first indoor-side opening 161 and a second indoor-side opening 162. The left surface 103 includes a refrigerant return opening 165.

The first outdoor-side opening 151 is connected to the outlet of the outdoor heat exchanger 40. The second outdoor-side opening 152 is connected to the inlet of the outdoor heat exchanger 40. The first indoor-side opening 161 is connected to the outlet of the indoor condenser 30. The second indoor-side opening 162 is connected to the inlet of the indoor evaporator 50. The refrigerant return opening 165 is connected to the inlet of the accumulator 80.

The valve body 100 includes refrigerant passages formed by cutting. Specifically, the valve body 100 includes a main high-pressure-refrigerant passage 110, a first branch high-pressure-refrigerant passage 111, and a second branch high-pressure-refrigerant passage 112. The valve body 100 further includes a main low-pressure-refrigerant passage 120, a first branch low-pressure-refrigerant passage 121, and a second branch low-pressure-refrigerant passage 122.

The main high-pressure-refrigerant passage 110 is connected to the first indoor-side opening 161. The main high-pressure-refrigerant passage 110 is further connected to the first branch high-pressure-refrigerant passage 111 and the second branch high-pressure-refrigerant passage 112. Refrigerant flows from the main high-pressure-refrigerant passage 110 to the first branch high-pressure-refrigerant passage 111 and the second branch high-pressure-refrigerant passage 112.

The main low-pressure-refrigerant passage 120 is connected to the first outdoor-side opening 151. The main low-pressure-refrigerant passage 120 is connected to the first branch low-pressure-refrigerant passage 121 and the second branch low-pressure-refrigerant passage 122. Refrigerant flows from the main low-pressure-refrigerant passage 120 to the first branch low-pressure-refrigerant passage 121 and the second branch low-pressure-refrigerant passage 122.

The high-pressure flow control valve unit 200 is disposed in the first branch high-pressure-refrigerant passage 111. The first branch high-pressure-refrigerant passage 111 includes a point connected to the second outdoor-side opening 152, and the point is a downstream end of the first branch high-pressure-refrigerant passage 111 and is further from the main high-pressure-refrigerant passage 110 than the high-pressure flow control valve unit 200 is.

The high-pressure on-off valve unit 300 is disposed in the second branch high-pressure-refrigerant passage 112. The second branch high-pressure-refrigerant passage 112 includes a point connected to the first branch low-pressure-refrigerant passage 121, and the point is a downstream end of the second branch high-pressure-refrigerant passage 112 and is further from the main high-pressure-refrigerant passage 110 than the high-pressure on-off valve unit 300 is.

The check valve unit 600 and the low-pressure flow control valve unit 400 are disposed in the first branch low-pressure-refrigerant passage 121. The check valve unit 600 is nearer the main low-pressure-refrigerant passage 120 than the low-pressure flow control valve unit 400 is. The first branch low-pressure-refrigerant passage 121 includes a point connected to the second indoor-side opening 162, and the point is a downstream end of the first branch low-pressure-refrigerant passage 121 and is further from the main low-pressure-refrigerant passage 120 than the low-pressure flow control valve unit 400 is. The first branch low-pressure-refrigerant passage 121 includes a point connected to the downstream end of the second branch high-pressure-refrigerant passage 112, and the point is between the check valve unit 600 and the low-pressure flow control valve unit 400. It is sufficient that the second branch high-pressure-refrigerant passage 112 substantially connects the main high-pressure-refrigerant passage 110 and the point in the first branch low-pressure-refrigerant passage 121, and the point is between the check valve unit 600 and the low-pressure flow control valve unit 400.

The low-pressure on-off valve unit 500 is disposed in the second branch low-pressure-refrigerant passage 122. The second branch low-pressure-refrigerant passage 122 includes a point connected to the refrigerant return opening 165, and the point is a downstream end of the second branch low-pressure-refrigerant passage 122 and is further from the main low-pressure-refrigerant passage 120 than the low-pressure on-off valve unit 500 is.

The main high-pressure-refrigerant passage 110 and the first branch high-pressure-refrigerant passage 111 constitute a part of the first refrigerant passage 11. The main low-pressure-refrigerant passage 120 and the second branch low-pressure-refrigerant passage 122 constitute a part of the second refrigerant passage 12. The main low-pressure-refrigerant passage 120 and the first branch low-pressure-refrigerant passage 121 constitute a part of the third refrigerant passage 13. The second branch high-pressure-refrigerant passage 112 constitutes the bypass passage 15. The bypass passage 15 connects a first point in the first refrigerant passage 11 to a second point in the third refrigerant passage 13, the first point is between the outlet of the indoor condenser 30 and the high-pressure flow control valve unit 200, and the second point is between the check valve unit 600 and the low-pressure flow control valve unit 400.

The high-pressure flow control valve unit 200 is disposed in the first upper surface 105, near the left surface 103. The high-pressure flow control valve unit 200 can change the passage area of the first branch high-pressure-refrigerant passage 111 in a stepless manner. In the specification, the meaning of the words "a stepless manner" includes "a substantially stepless manner".

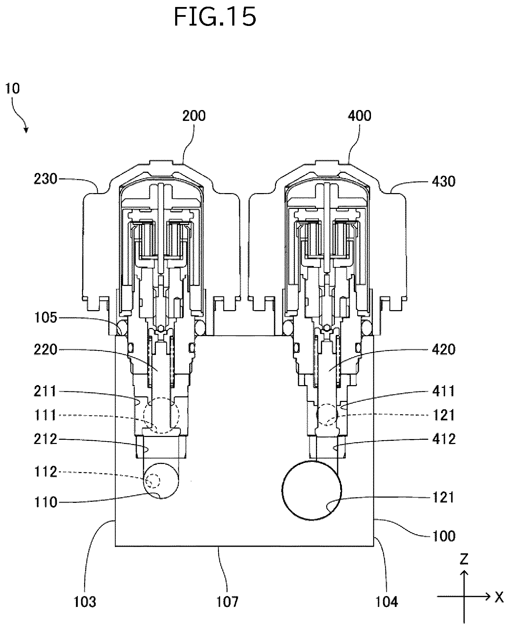

The high-pressure flow control valve unit 200 constitutes an electric expansion valve together with the valve body 100. As illustrated in Fig. 15 and Fig. 20, the valve body 100 includes a valve chamber 211 and a valve port 212 that is open to the valve chamber 211. The valve chamber 211 and the valve port 212 are disposed in series in the first branch high-pressure-refrigerant passage 111. The valve chamber 211 and the valve port 212 substantially constitute a part of the first branch high-pressure-refrigerant passage 111. In the first branch high-pressure-refrigerant passage 111, the valve chamber 211 is further from the main high-pressure-refrigerant passage 110 than the valve port 212 is.

The high-pressure flow control valve unit 200 includes a valve member 220 and a valve-member-driving section 230.

The valve member 220 includes a stem 221, a valve portion 222, a spring receiving portion 223, and a ball receiving portion 224. The stem 221 has a circular columnar shape. The valve portion 222 is disposed on the lower part of the stem 221. The valve portion 222 has a circular annular shape. The valve portion 222 protrudes radially outward from the outer circumferential surface of the stem 221. The spring receiving portion 223 is disposed on the upper part of the stem 221. The spring receiving portion 223 includes a flange portion protruding radially outward. The ball receiving portion 224 includes a flat plate portion having a circular shape, and a projecting portion disposed on the lower surface of the flat plate portion. The projecting portion is fitted into a hole provided in the spring receiving portion 223. The valve portion 222 of the valve member 220 moves toward and away from the valve port 212. The valve member 220 changes the opening area of the valve port 212 (i.e., the passage area of the first branch high-pressure-refrigerant passage 111) in a stepless manner.

The valve-member-driving section 230 moves the valve member 220 in the up-and-down direction, and moves the valve portion 222 toward and away from the valve port 212. The valve-member-driving section 230 includes a holder 240, a can 250, a rotor 260, a planetary gear mechanism 270, a driving shaft 282, a ball 284, and a stator unit 290.

The holder 240 is made of a metal such as an aluminum alloy. The holder 240 has a circular cylindrical shape. The holder 240 is mounted on the valve body 100 by a screw structure. A driving shaft supporting member 242 has a circular cylindrical shape and is disposed inside the upper part of the holder 240. The lower part of the inner circumferential surface of the driving shaft supporting member 242 has an internal thread 242a. A valve member supporting member 244 has a circular cylindrical shape and is disposed between the lower part of the holder 240 and the valve body 100. The valve member supporting member 244 has a valve member supporting hole 244a extending through the valve member supporting member 244 in the up-and-down direction. The stem 221 of the valve member 220 is disposed in the valve member supporting hole 244a. A valve opening spring 246 is disposed between the spring receiving portion 223 of the valve member 220 and the valve member supporting member 244. The valve opening spring 246 is a compression coil spring. The valve opening spring 246 pushes the valve member 220 upward.

The can 250 has a circular cylindrical shape that is open at the lower end and is closed at the upper end. The lower end of the can 250 is bonded to the holder 240 via an annular member 251.

The rotor 260 has a circular cylindrical shape. The outer circumferential surface of the rotor 260 has a permanent magnet. The rotor 260 is rotatably disposed inside the can 250. The rotor 260 is coupled to a connecting member 262 having a disc shape. A rotor shaft 263 extends through the center of the connecting member 262.

The planetary gear mechanism 270 includes a fixed ring gear 271, a sun gear 272, planetary gears 273, a carrier 274, an output gear 275, and an output shaft 276. The sun gear 272 is coupled coaxially to the connecting member 262. The sun gear 272 rotates together with the rotor 260 and the connecting member 262. The rotational speed of the sun gear 272 is reduced by the fixed ring gear 271, the planetary gears 273, the carrier 274 and the output gear 275, and the rotation is transmitted to the output shaft 276. The output shaft 276 is disposed inside the driving shaft supporting member 242.

The driving shaft 282 has a circular columnar shape. The outer circumferential surface of the driving shaft 282 has an external thread 282a. The external thread 282a is screwed into the internal thread 242a of the driving shaft supporting member 242. A flat plate portion 282b is provided on the upper end surface of the driving shaft 282. The output shaft 276 of the planetary gear mechanism 270 includes a slit 276a. The flat plate portion 282b is disposed in the slit 276a and can move in the up-and-down direction. The driving shaft 282 rotates together with rotation of the output shaft 276. The screw-feed action between the external thread 282a and the internal thread 242a moves the driving shaft 282 in the up-and-down direction. The ball 284 is disposed between the driving shaft 282 and the ball receiving portion 224 of the valve member 220.

The stator unit 290 has a circular cylindrical shape. The can 250 is disposed in the stator unit 290. The stator unit 290 is disposed outside the can 250. The stator unit 290 includes a stator that is not illustrated. The stator of the stator unit 290 and the rotor 260 constitute a stepping motor.

In the high-pressure flow control valve unit 200, a current is applied to the stator of the stator unit 290 to rotate the rotor 260 in one direction. The rotational speed of the rotor 260 is reduced by the planetary gear mechanism 270, and the driving shaft 282 is rotated by the output shaft 276. When the driving shaft 282 is rotated, the screw-feed action moves the driving shaft 282 downward. The driving shaft 282 pushes the valve member 220 downward via the ball 284. The valve member 220 moves downward, and the opening area of the valve port 212 decreases. In the present embodiment, the minimum opening area of the valve port 212 is 0, that is, the valve port 212 is in a fully closed state.

In the high-pressure flow control valve unit 200, a current is applied to the stator of the stator unit 290 to rotate the rotor 260 in the other direction. The rotational speed of the rotor 260 is reduced by the planetary gear mechanism 270, and the driving shaft 282 is rotated by the output shaft 276. When the driving shaft 282 is rotated, the screw-feed action moves the driving shaft 282 upward. The valve member 220 is pushed by the valve opening spring 246 and moves upward, and the opening area of the valve port 212 increases.

Instead of the high-pressure flow control valve unit 200, a high-pressure flow control valve unit 200A illustrated in Fig. 21 may be employed. The high-pressure flow control valve unit 200A has a configuration in which the high-pressure flow control valve unit 200 is combined with a case 210 that includes a valve chamber 211 and a valve port 212. In the high-pressure flow control valve unit 200A, the holder 240 is mounted on the case 210 by a screw structure, and the case 210 is mounted on the valve body 100 by a screw structure. The case 210 may be mounted on the valve body 100 by a mounting structure other than the screw structure.

Strictly, the high-pressure flow control valve unit 200 changes the passage area in a stepwise manner due to the movement of the valve member 220 by the stepping motor. However, the valve member 220 travels a short distance per one step, enabling the high-pressure flow control valve unit 200 to change the passage area in a substantially stepless manner. The valve device 10 may employ a mechanical flow control valve in which a valve member is moved by a diaphragm instead of the high-pressure flow control valve unit 200. This mechanical flow control valve can change the passage area in a stepless manner.

The high-pressure on-off valve unit 300 is disposed in the center of the left surface 103. The high-pressure on-off valve unit 300 can open and close the second branch high-pressure-refrigerant passage 112. That is, the high-pressure on-off valve unit 300 can change the passage area of the second branch high-pressure-refrigerant passage 112 to zero or to an area greater than zero.

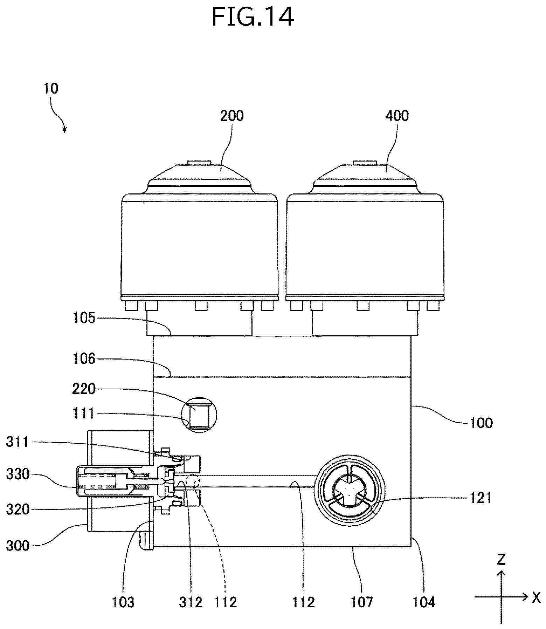

The high-pressure on-off valve unit 300 constitutes a pilot-operated on-off valve together with the valve body 100. As illustrated in Fig. 14, Fig. 19, and Fig. 22, the valve body 100 includes a main valve chamber 311, a main valve port 312 that is open to the main valve chamber 311, and a main valve seat 313 that encloses the main valve port 312. The main valve chamber 311 and the main valve port 312 are disposed in series in the second branch high-pressure-refrigerant passage 112. The main valve chamber 311 and the main valve port 312 substantially constitute a part of the second branch high-pressure-refrigerant passage 112. In the second branch high-pressure-refrigerant passage 112, the main valve chamber 311 is nearer the main high-pressure-refrigerant passage 110 than the main valve port 312 is.

The high-pressure on-off valve unit 300 includes a main valve member 320 and a valve-member-driving section 330.

The main valve member 320 has a disc shape. The main valve member 320 includes a pilot passage 325 and a pressure equalizing passage 326. The main valve member 320 comes into contact with and moves away from the main valve seat 313, opening and closing the main valve port 312.

The valve-member-driving section 330 includes a fixed core 331, a case 332, a plunger 333, an electromagnetic coil 334, a pilot valve member 335, and a spring receiving member 336.

The fixed core 331 integrally includes a large-diameter cylindrical portion 331a and a small-diameter cylindrical portion 331b. The large-diameter cylindrical portion 331a is mounted on the valve body 100 by a screw structure. The small-diameter cylindrical portion 331b is disposed coaxially with the large-diameter cylindrical portion 331a. The small-diameter cylindrical portion 331b projects from the left surface 103 of the valve body 100. The main valve member 320 is disposed inside the large-diameter cylindrical portion 331a and can move in the left-and-right direction. The main valve member 320 separates a back pressure chamber 314 inside the large-diameter cylindrical portion 331a from the main valve chamber 311. The pilot passage 325 connects the back pressure chamber 314 to the main valve port 312. The pressure equalizing passage 326 connects the main valve chamber 311 to the back pressure chamber 314. A valve opening spring 337 is disposed between the main valve member 320 and the large-diameter cylindrical portion 331a. The valve opening spring 337 is a compression coil spring. The valve opening spring 337 pushes the main valve member 320 leftward.

The case 332 has a circular cylindrical shape that is open at the first end and is closed at the second end. The small-diameter cylindrical portion 331b of the fixed core 331 is disposed inside the first end of the case 332. The first end of the case 332 is bonded to the fixed core 331.

The plunger 333 has a circular cylindrical shape that is open at the first end and is closed at the second end. The plunger 333 is disposed inside the case 332 and can move in the left-and-right direction. A first plunger spring 338 is disposed between the second end of the plunger 333 and the fixed core 331. The first plunger spring 338 is a compression coil spring. The first plunger spring 338 pushes the plunger 333 leftward. The second end of the plunger 333 has a through hole 333a.

The electromagnetic coil 334 has a circular cylindrical shape. The case 332 is disposed in the electromagnetic coil 334. The electromagnetic coil 334 is disposed outside the case 332. The electromagnetic coil 334 magnetizes the fixed core 331 and the plunger 333.

The pilot valve member 335 has an elongated circular columnar shape. The pilot valve member 335 is disposed inside the through hole 333a of the plunger 333 and the small-diameter cylindrical portion 331b. The pilot valve member 335 includes a first end (a left end) with which the spring receiving member 336 having a circular columnar shape is provided continuously. The spring receiving member 336 is disposed inside the plunger 333. The diameter of the spring receiving member 336 is larger than the diameter of the through hole 333a. A second plunger spring 339 is disposed between the spring receiving member 336 and the second end of the case 332. The second plunger spring 339 is a compression coil spring. The second plunger spring 339 pushes the spring receiving member 336 rightward and presses the spring receiving member 336 to the plunger 333. The pilot valve member 335 includes a second end (a right end) in which a pilot valve portion 335a having a conical shape is provided. The pilot valve portion 335a is disposed in the back pressure chamber 314. The pilot valve portion 335a opens and closes the pilot passage 325.

In the high-pressure on-off valve unit 300, when the electromagnetic coil 334 is energized, the plunger 333 is moved toward the fixed core 331 by magnetic force, and the pilot valve member 335 (the pilot valve portion 335a) closes the pilot passage 325. Furthermore, the pilot valve member 335 pushes the main valve member 320 rightward, and the main valve member 320 comes into contact with the main valve seat 313 and closes the main valve port 312. In a state where the main valve port 312 is closed, refrigerant in the main valve chamber 311 and the back pressure chamber 314 is restricted from flowing into the main valve port 312, and refrigerant remains in the main valve chamber 311 and the back pressure chamber 314. This causes the main valve member 320 to be pressed to the main valve seat 313 by refrigerant.

In the high-pressure on-off valve unit 300, when the electromagnetic coil 334 is not energized, the plunger 333 is pushed by the first plunger spring 338 and moves leftward. The pilot valve member 335 moves leftward together with the plunger 333, and the pilot passage 325 opens. Then, refrigerant in the back pressure chamber 314 flows into the main valve port 312 via the pilot passage 325, reducing force applied by refrigerant to press the main valve member 320 to the main valve seat 313. The valve opening spring 337 pushes the main valve member 320 leftward, the main valve member 320 moves away from the main valve seat 313, and the main valve port 312 opens. This allows refrigerant in the main valve chamber 311 to flow into the main valve port 312.

The high-pressure on-off valve unit 300 may include a valve chamber and a valve seat like an electric valve, for example, disclosed in Japanese Unexamined Patent Application Publication No. 2016-200198. Alternatively, the high-pressure on-off valve unit 300 may include a case with a valve chamber and a valve seat (a valve port) like the high-pressure flow control valve unit 200A illustrated in Fig. 21.

The low-pressure flow control valve unit 400 is disposed in the first upper surface 105, near the right surface 104. The low-pressure flow control valve unit 400 can change the passage area of the first branch low-pressure-refrigerant passage 121 in a stepless manner.

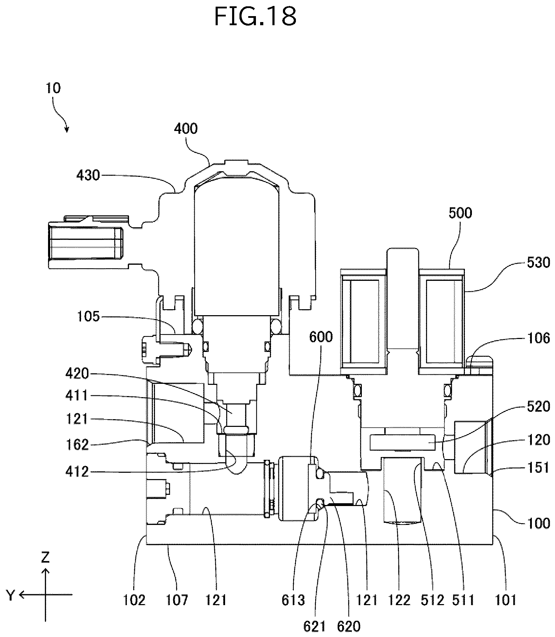

The low-pressure flow control valve unit 400 constitutes an electric expansion valve together with the valve body 100. As illustrated in Fig. 15 and Fig. 18, the valve body 100 includes a valve chamber 411 and a valve port 412 that is open to the valve chamber 411. The valve chamber 411 and the valve port 412 are disposed in series in the first branch low-pressure-refrigerant passage 121. The valve chamber 411 and the valve port 412 substantially constitute a part of the first branch low-pressure-refrigerant passage 121. In the first branch low-pressure-refrigerant passage 121, the valve chamber 411 is further from the main low-pressure-refrigerant passage 120 than the valve port 412 is.

The low-pressure flow control valve unit 400 includes a valve member 420 and a valve-member-driving section 430. Since the valve member 420 and the valve-member-driving section 430 have the same (including substantially the same) configuration as that of the valve member 220 and the valve-member-driving section 430 of the high-pressure flow control valve unit 200, their detailed descriptions are omitted. Instead of the low-pressure flow control valve unit 400, a valve unit having the same (including substantially the same) configuration as that of the high-pressure flow control valve unit 200A illustrated in Fig. 21 may be employed.

The low-pressure on-off valve unit 500 is disposed in the second upper surface 106, near the right surface 104. The low-pressure on-off valve unit 500 can open and close the second branch low-pressure-refrigerant passage 122. That is, the low-pressure on-off valve unit 500 can change the passage area of the second branch low-pressure-refrigerant passage 122 to zero or to an area greater than zero.

The low-pressure on-off valve unit 500 constitutes a pilot type on-off valve together with the valve body 100. As illustrated in Fig. 13, Fig. 17, and Fig. 23, the valve body 100 includes a main valve chamber 511, a main valve port 512 that is open to the main valve chamber 511, and a main valve seat 513 that encloses the main valve port 512. The main valve chamber 511 and the main valve port 512 are disposed in series in the second branch low-pressure-refrigerant passage 122. The main valve chamber 511 and the main valve port 512 substantially constitute a part of the second branch low-pressure-refrigerant passage 122. In the second branch low-pressure-refrigerant passage 122, the main valve chamber 511 is nearer the main low-pressure-refrigerant passage 120 than the main valve port 512 is. The main valve chamber 511 and the first branch low-pressure-refrigerant passage 121 are also disposed in series, and the main valve chamber 511 substantially constitutes a part of the first branch low-pressure-refrigerant passage 121 as well.

The low-pressure on-off valve unit 500 includes a main valve member 520 and a valve-member-driving section 530.

The main valve member 520 integrally includes a body portion 521, an upper flange portion 522, and a lower flange portion 523. The body portion 521 has a circular columnar shape. The upper flange portion 522 is provided continuously with the upper part of the body portion 521. The lower flange portion 523 is provided continuously with the lower part of the body portion 521. The body portion 521 includes a pilot passage 525. The upper flange portion 522 includes a pressure equalizing passage 526. The main valve member 520 comes into contact with and moves away from the main valve seat 513, opening and closing the main valve port 512. A valve opening spring 537 is disposed between the upper flange portion 522 of the main valve member 520 and the valve body 100. The valve opening spring 537 is a compression coil spring. The valve opening spring 537 pushes the main valve member 520 (the upper flange portion 522) upward.

The valve-member-driving section 530 includes a fixed core 531, a case 532, a plunger 533, an electromagnetic coil 534, a pilot valve member 535, and a valve shaft 536.

The fixed core 531 integrally includes a large-diameter cylindrical portion 531a and a small-diameter cylindrical portion 531b. The large-diameter cylindrical portion 531a is mounted on the valve body 100 by a screw structure. The small-diameter cylindrical portion 531b is disposed coaxially with the large-diameter cylindrical portion 531a. The small-diameter cylindrical portion 531b projects from the second upper surface 106 of the valve body 100. The upper flange portion 522 of the main valve member 520 is disposed inside the large-diameter cylindrical portion 531a and can move in the up-and-down direction. The upper flange portion 522 of the main valve member 520 separates a back pressure chamber 514 inside the large-diameter cylindrical portion 531a and the main valve chamber 511. The pilot passage 525 connects the back pressure chamber 514 to the main valve port 512. The pressure equalizing passage 526 connects the main valve chamber 511 to the back pressure chamber 514.

The case 532 has a circular cylindrical shape that is open at the lower end and is closed at the upper end. The small-diameter cylindrical portion 531b of the fixed core 531 is disposed inside the lower end of the case 532. The lower end of the case 532 is bonded to the fixed core 531.

The plunger 533 has a circular cylindrical shape. The plunger 533 is disposed inside the case 532 and can move in the up-and-down direction. A plunger spring 538 is disposed between the lower end of the plunger 533 and the fixed core 531. The plunger spring 538 is a compression coil spring. The plunger spring 538 pushes the plunger 533 upward.

The electromagnetic coil 534 has a circular cylindrical shape. The case 532 is disposed in the electromagnetic coil 534. The electromagnetic coil 534 is disposed outside the case 532. The electromagnetic coil 534 magnetizes the fixed core 531 and the plunger 533.

The pilot valve member 535 is provided integrally and continuously with the lower end of the valve shaft 536. The pilot valve member 535 is disposed in the back pressure chamber 514. The pilot valve member 535 is connected to the plunger 533 via the valve shaft 536. A pilot valve portion 535a that is packing having a disc shape is provided in the pilot valve member 535. The pilot valve portion 535a opens and closes the pilot passage 525.

The valve shaft 536 has an elongated circular cylindrical shape. The upper end of the valve shaft 536 is secured to the lower end of the plunger 533. The valve shaft 536 is disposed inside the small-diameter cylindrical portion 531b of the fixed core 531. The valve shaft 536 is supported by the small-diameter cylindrical portion 531b and can move in the up-and-down direction.

In the low-pressure on-off valve unit 500, when the electromagnetic coil 534 is energized, the plunger 533 is moved toward the fixed core 531 by magnetic force, and the pilot valve member 535 (the pilot valve portion 535a) closes the pilot passage 525. Furthermore, the pilot valve member 535 pushes the main valve member 520 downward, and the main valve member 520 comes into contact with the main valve seat 513 and closes the main valve port 512. In a state where the main valve port 512 is closed, refrigerant in the main valve chamber 511 and the back pressure chamber 514 is restricted from flowing into the main valve port 512, and refrigerant remains in the main valve chamber 511 and the back pressure chamber 514. This causes the main valve member 520 to be pressed to the main valve seat 513 by refrigerant.

In the low-pressure on-off valve unit 500, when the electromagnetic coil 534 is not energized, the plunger 533 is pushed by the plunger spring 538 and moves upward. The pilot valve member 535 moves upward together with the plunger 533, and the pilot passage 525 opens. Then, refrigerant in the back pressure chamber 514 flows into the main valve port 512 via the pilot passage 525, reducing force applied by refrigerant to press the main valve member 520 to the main valve seat 513. The valve opening spring 537 pushes the main valve member 520 upward, the main valve member 520 moves away from the main valve seat 513, and the main valve port 512 opens. This allows refrigerant in the main valve chamber 511 to flow into the main valve port 512.

The low-pressure on-off valve unit 500 may include a valve chamber and a valve seat like the electric valve, for example, disclosed in the Japanese Unexamined Patent Application Publication No. 2016-200198. Alternatively, the high-pressure on-off valve unit 300 may include a case with a valve chamber and a valve seat (a valve port) like the high-pressure flow control valve unit 200A illustrated in Fig. 21.

The check valve unit 600 is disposed in the first branch low-pressure-refrigerant passage 121 and is nearer the main low-pressure-refrigerant passage 120 than the low-pressure flow control valve unit 400 is. The check valve unit 600 allows refrigerant to flow from the main low-pressure-refrigerant passage 120 to the low-pressure flow control valve unit 400 and restricts refrigerant from flowing from the low-pressure flow control valve unit 400 to the main low-pressure-refrigerant passage 120.

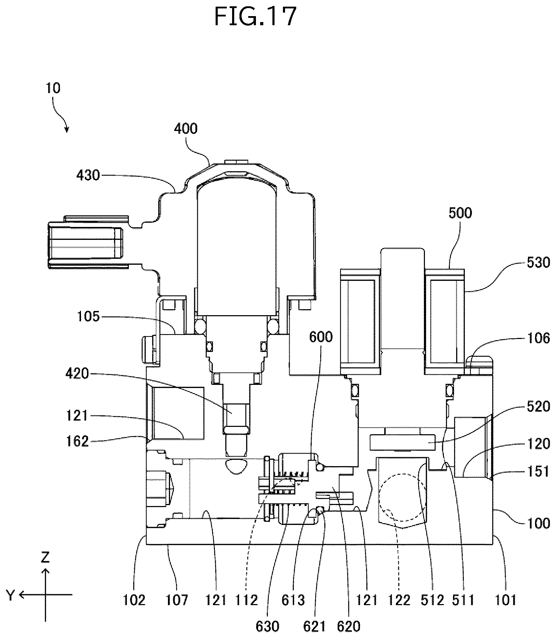

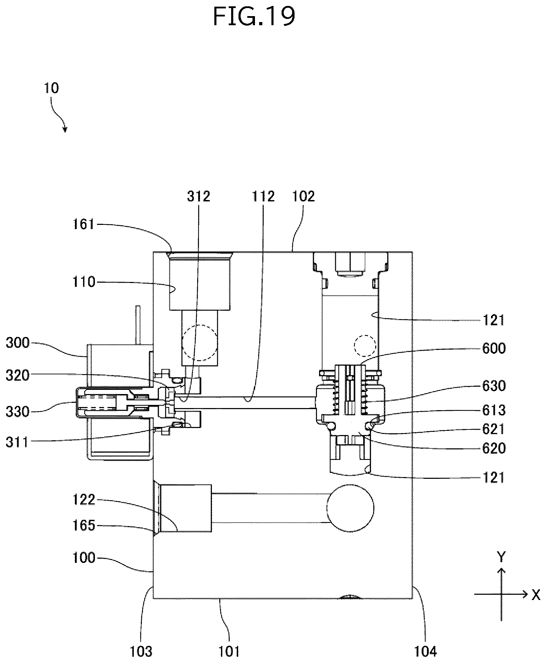

The check valve unit 600 constitutes a check valve together with the valve body 100. As illustrated in Fig. 17 and Fig. 19, the valve body 100 includes a valve seat 613, which has a circular annular shape and is disposed in the first branch low-pressure-refrigerant passage 121. The check valve unit 600 includes a valve member 620 and a valve closing spring 630. The valve member 620 is disposed in the first branch low-pressure-refrigerant passage 121 and can move in a direction of refrigerant flow (the front-and-back direction). The valve member 620 includes a valve portion 621 having a circular annular shape. The valve closing spring 630 is a compression coil spring. The valve closing spring 630 pushes the valve member 620 toward the main low-pressure-refrigerant passage 120 (frontward).

In the first branch low-pressure-refrigerant passage 121, when pressure of refrigerant at a front side (a main low-pressure-refrigerant passage 120 side) of the valve member 620 is higher than pressure of refrigerant at a back side (a low-pressure flow control valve unit 400 side) of the valve member 620, the valve member 620 moves backward, the valve portion 621 moves away from the valve seat 613, and the first branch low-pressure-refrigerant passage 121 opens.

In the first branch low-pressure-refrigerant passage 121, when pressure of refrigerant at the back side (the low-pressure flow control valve unit 400 side) of the valve member 620 is higher than pressure of refrigerant at the front side (the main low-pressure-refrigerant passage 120 side) of the valve member 620, the valve member 620 moves forward, the valve portion 621 comes into contact with the valve seat 613, and the first branch low-pressure-refrigerant passage 121 closes.

The air conditioning device 1 includes a controller that is not illustrated. The controller controls the compressor 20 and the valve device 10 (the high-pressure flow control valve unit 200, the high-pressure on-off valve unit 300, the low-pressure flow control valve unit 400, and the low-pressure on-off valve unit 500). The air conditioning device 1 includes the cooling operation mode, the heating operation mode, the first dehumidification heating operation mode, and the second dehumidification heating operation mode.

In the cooling operation mode, the controller of the air conditioning device 1 maximizes (fully opens) the passage area of the first refrigerant passage 11 by the high-pressure flow control valve unit 200, closes the bypass passage 15 by the high-pressure on-off valve unit 300, controls the passage area of the third refrigerant passage 13 into a size capable of expanding refrigerant by the low-pressure flow control valve unit 400, and closes the second refrigerant passage 12 by the low-pressure on-off valve unit 500. Then the controller operates the compressor 20, circulating refrigerant. As illustrated in Fig. 2, in the cooling operation mode, refrigerant flows through the compressor 20, the indoor condenser 30, the first refrigerant passage 11 (the high-pressure flow control valve unit 200), the outdoor heat exchanger 40, the third refrigerant passage 13 (the check valve unit 600, the low-pressure flow control valve unit 400), the indoor evaporator 50, the fourth refrigerant passage 14 (the pressure control valve 70), and the accumulator 80 in this sequence, and then returns to the compressor 20. In the cooling operation mode, air cooled by the indoor evaporator 50 is blown into the cabin of the vehicle.

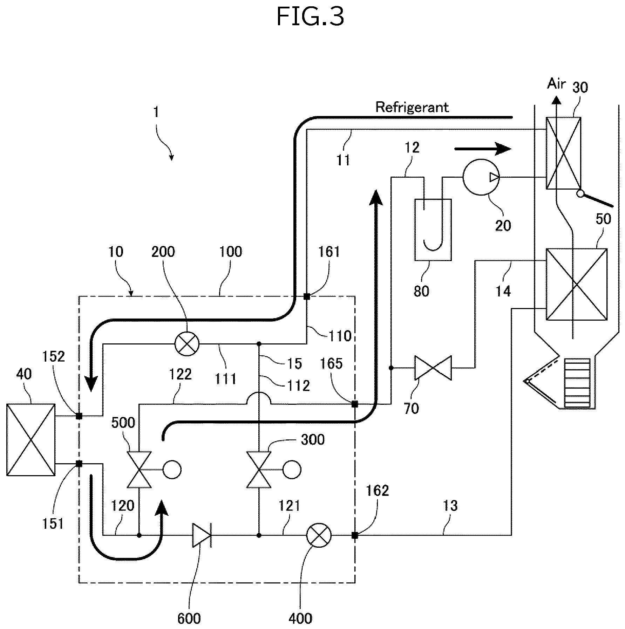

In the heating operation mode, the controller of the air conditioning device 1 controls the passage area of the first refrigerant passage 11 into a size capable of expanding refrigerant by the high-pressure flow control valve unit 200, closes the bypass passage 15 by the high-pressure on-off valve unit 300, controls (fully closes) the passage area of the third refrigerant passage 13 into a size of zero by the low-pressure flow control valve unit 400, and opens the second refrigerant passage 12 by the low-pressure on-off valve unit 500. Then the controller operates the compressor 20, circulating refrigerant. As illustrated in Fig. 3, in the heating operation mode, refrigerant flows through the compressor 20, the indoor condenser 30, the first refrigerant passage 11 (the high-pressure flow control valve unit 200), the outdoor heat exchanger 40, the second refrigerant passage 12 (the low-pressure on-off valve unit 500), and the accumulator 80 in this sequence, and then returns to the compressor 20. In the heating operation mode, air passes the indoor evaporator 50 (without cooling), is heated by the indoor condenser 30, and then is blown into the cabin of the vehicle.

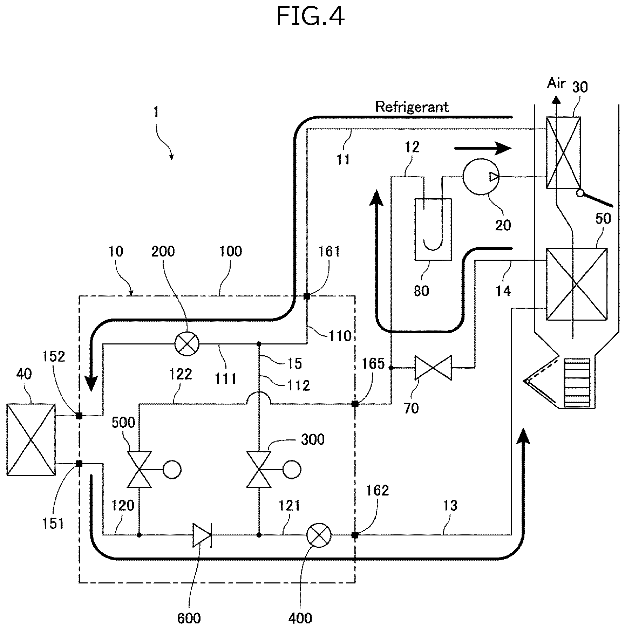

In the first dehumidification heating operation mode, the controller of the air conditioning device 1 controls the passage area of the first refrigerant passage 11 into a size capable of expanding refrigerant by the high-pressure flow control valve unit 200, closes the bypass passage 15 by the high-pressure on-off valve unit 300, controls the passage area of the third refrigerant passage 13 into a size capable of expanding refrigerant by the low-pressure flow control valve unit 400, and closes the second refrigerant passage 12 by the low-pressure on-off valve unit 500. Then the controller operates the compressor 20, circulating refrigerant. As illustrated in Fig. 4, in the first dehumidification heating operation mode, refrigerant flows through the compressor 20, the indoor condenser 30, the first refrigerant passage 11 (the high-pressure flow control valve unit 200), the outdoor heat exchanger 40, the third refrigerant passage 13 (the check valve unit 600, the low-pressure flow control valve unit 400), the indoor evaporator 50, the fourth refrigerant passage 14 (the pressure control valve 70), and the accumulator 80 in this sequence, and then returns to the compressor 20. In the first dehumidification heating operation mode, air is cooled (dehumidified) by the indoor evaporator 50, is heated by the indoor condenser 30, and then is blown into the cabin of the vehicle.

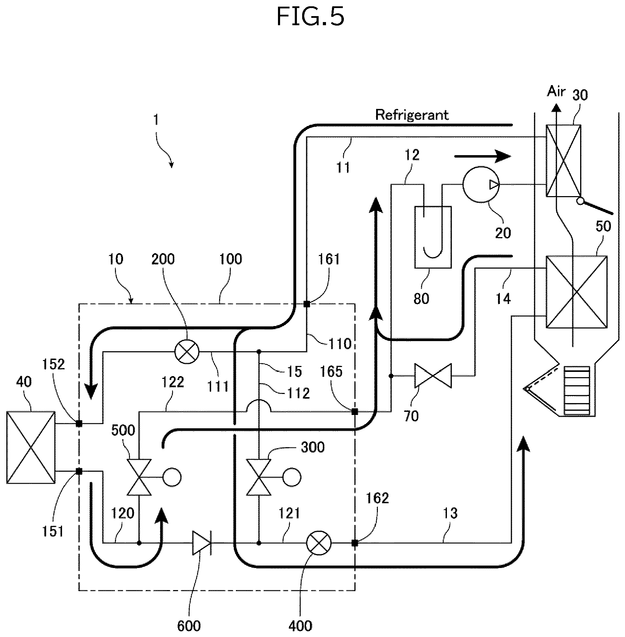

In the second dehumidification heating operation mode, the controller of the air conditioning device 1 controls the passage area of the first refrigerant passage 11 into a size capable of expanding refrigerant by the high-pressure flow control valve unit 200, opens the bypass passage 15 by the high-pressure on-off valve unit 300, controls the passage area of the third refrigerant passage 13 into a size capable of expanding refrigerant by the low-pressure flow control valve unit 400, and opens the second refrigerant passage 12 by the low-pressure on-off valve unit 500. Then the controller operates the compressor 20, circulating refrigerant. As illustrated in Fig. 5, in the second dehumidification heating operation mode, refrigerant flows through the compressor 20, the indoor condenser 30, the first refrigerant passage 11 (the high-pressure flow control valve unit 200), the outdoor heat exchanger 40, the second refrigerant passage 12 (the low-pressure on-off valve unit 500), and the accumulator 80 in this sequence, and then returns to the compressor 20. Additionally, refrigerant branches off the first refrigerant passage 11, flows through the bypass passage 15 (the high-pressure on-off valve unit 300), the third refrigerant passage 13 (the low-pressure flow control valve unit 400), the indoor evaporator 50, the fourth refrigerant passage 14 (the pressure control valve 70), and the accumulator 80 in this sequence, and returns to the compressor 20. In the second dehumidification heating operation mode, air is cooled (dehumidified) by the indoor evaporator 50, is heated by the indoor condenser 30, and then is blown into the cabin of the vehicle. The flow rate of refrigerant flowing through the indoor evaporator 50 in the second dehumidification heating operation mode is smaller than in the first dehumidification heating operation mode, and heat absorbed by refrigerant in the second dehumidification heating operation mode is smaller than in the first dehumidification heating operation mode. This allows air blown into the cabin of the vehicle dehumidified by the indoor evaporator 50 to have a relatively high temperature and to be controlled within a high temperature zone by the indoor condenser 30.

As described above, the valve device 10 of the air conditioning device 1 according to the present embodiment includes the valve body 100, the high-pressure flow control valve unit 200, the high-pressure on-off valve unit 300, the low-pressure flow control valve unit 400, the low-pressure on-off valve unit 500, and the check valve unit 600. The valve body 100 includes the main high-pressure-refrigerant passage 110, the first branch high-pressure-refrigerant passage 111 that is connected to the main high-pressure-refrigerant passage 110, the second branch high-pressure-refrigerant passage 112 that is connected to the main high-pressure-refrigerant passage 110, the main low-pressure-refrigerant passage 120, the first branch low-pressure-refrigerant passage 121 that is connected to the main low-pressure-refrigerant passage 120, and the second branch low-pressure-refrigerant passage 122 that is connected to the main low-pressure-refrigerant passage 120. The high-pressure flow control valve unit 200 is configured to change the passage area of the first branch high-pressure-refrigerant passage 111 in the stepless manner. The high-pressure on-off valve unit 300 is configured to open and close the second branch high-pressure-refrigerant passage 112. The low-pressure flow control valve unit 400 is configured to change the passage area of the first branch low-pressure-refrigerant passage 121 in the stepless manner. The low-pressure on-off valve unit 500 is configured to open and close the second branch low-pressure-refrigerant passage 122. The check valve unit 600 is disposed in the first branch low-pressure-refrigerant passage 121, nearer the main low-pressure-refrigerant passage 120 than the low-pressure flow control valve unit 400 is. The check valve unit 600 allows refrigerant to flow from the main low-pressure-refrigerant passage 120 to the low-pressure flow control valve unit 400 and restricts refrigerant from flowing from the low-pressure flow control valve unit 400 to the main low-pressure-refrigerant passage 120. The second branch high-pressure-refrigerant passage 112 connects the main high-pressure-refrigerant passage 110 and the point in the first branch low-pressure-refrigerant passage 121, and the point is between the check valve unit 600 and the low-pressure flow control valve unit 400.

With this configuration, the first branch high-pressure-refrigerant passage 111 and the second branch high-pressure-refrigerant passage 112 are connected to the main high-pressure-refrigerant passage 110 in the valve body 100. By changing the passage areas of the first branch high-pressure-refrigerant passage 111 and the second branch high-pressure-refrigerant passage 112 by the high-pressure flow control valve unit 200 and the high-pressure on-off valve unit 300 that are mounted on the valve body 100, the refrigerant passages can be opened and closed or refrigerant flow rates in the refrigerant passages can be controlled. The first branch low-pressure-refrigerant passage 121 and the second branch low-pressure-refrigerant passage 122 are connected to the main low-pressure-refrigerant passage 120 in the valve body 100. By changing the passage areas of the first branch low-pressure-refrigerant passage 121 and the second branch low-pressure-refrigerant passage 122 by the low-pressure flow control valve unit 400 and the low-pressure on-off valve unit 500 that are mounted on the valve body 100, the refrigerant passages can be opened and closed or refrigerant flow rates in the refrigerant passages can be controlled. This allows refrigerant leakage at a point of connecting the refrigerant passages to each other and at a point of connecting the valve units to the refrigerant passages to be suppressed and reduces the number of connecting components. Additionally, pipes for connecting valve units can be omitted, enabling the suppression of pressure loss of refrigerant and reducing the amount of refrigerant used in the air conditioning device 1.

The valve body 100 includes the front surface 101 and the back surface 102 that are parallel to each other, the left surface 103 and the right surface 104 that are parallel to each other, and the first upper surface 105, the second upper surface 106, and the bottom surface 107 that are parallel to each other. The left surface 103 is at a right angle to the front surface 101. The first upper surface 105 is at a right angle to the front surface 101 and is at a right angle to the left surface 103. The high-pressure flow control valve unit 200 and the low-pressure flow control valve unit 400 are disposed on the first upper surface 105. The low-pressure on-off valve unit 500 is disposed on the second upper surface 106. The high-pressure on-off valve unit 300 is disposed on the left surface 103. The front surface 101 includes the first outdoor-side opening 151 that is connected to the main low-pressure-refrigerant passage 120. The front surface 101 further includes the second outdoor-side opening 152 that is connected to the point in the first branch high-pressure-refrigerant passage 111, and the point is further from the main high-pressure-refrigerant passage 110 than the high-pressure flow control valve unit 200 is. The back surface 102 includes the first indoor-side opening 161 that is connected to the main high-pressure-refrigerant passage 110. The back surface 102 further includes the second indoor-side opening 162 that is connected to the point in the first branch low-pressure-refrigerant passage 121, and the point is further from the main low-pressure-refrigerant passage 120 than the low-pressure flow control valve unit 400 is. The left surface 103 includes the refrigerant return opening 165 that is connected to the point in the second branch low-pressure-refrigerant passage 122, and the point is further from the main low-pressure-refrigerant passage 120 than the low-pressure on-off valve unit 500 is. The first outdoor-side opening 151 is connected to the outlet of the outdoor heat exchanger 40. The second outdoor-side opening 152 is connected to the inlet of the outdoor heat exchanger 40. The first indoor-side opening 161 is connected to the outlet of the indoor condenser 30. The second indoor-side opening 162 is connected to the inlet of the indoor evaporator 50. The refrigerant return opening 165 is connected to the inlet of the accumulator 80. With this configuration, in the air conditioning device 1, pipes extending from the valve device 10 away from the cabin are connected to the front surface 101 of the valve body 100, and pipes extending from the valve device 10 toward the cabin are connected to the back surface 102 of the valve body 100, inhibiting a complex pipe layout.

The valve device 10 described above has a configuration in which each valve unit is controlled by the controller of the host device or system in which the valve device is incorporated. In addition, a configuration in which the valve device 10 includes a control unit, which receives all signals from a host device or system and centrally controls multiple valve units, can be employed. In this configuration, preferably, the control unit is housed in a case and is disposed on a surface near a low-pressure-refrigerant passage in the valve body 100 (for example, the right surface 104 of the valve body 100). With this configuration, it is possible to suppress the temperature rise of the control unit by the relatively low temperature refrigerant flowing through the low-pressure-refrigerant passage.

Additionally, the high-pressure flow control valve unit 200 and the low-pressure flow control valve unit 400 of the valve device 10 described above have a configuration in which the rotational speed of the rotor is reduced and the rotation of the rotor is transmitted to the driving shaft. Instead of these flow control valve units, the valve device 10 may employ direct-operated flow control valve units with a configuration in which the rotation of the rotor is directly transmitted to the driving shaft.

Additionally, the high-pressure on-off valve unit 300 and the low-pressure on-off valve unit 500 of the valve device 10 described above are the pilot-operated on-off valve units that operate by electromagnetic force and require energization to maintain the valve-closing state where the main valve ports are closed. Instead of these on-off valve units, the valve device 10 may employ latching on-off valve units with a configuration in which the valve-opening and valve-closing states are maintained even when the electromagnetic coil is not energized.

### (Second Embodiment)

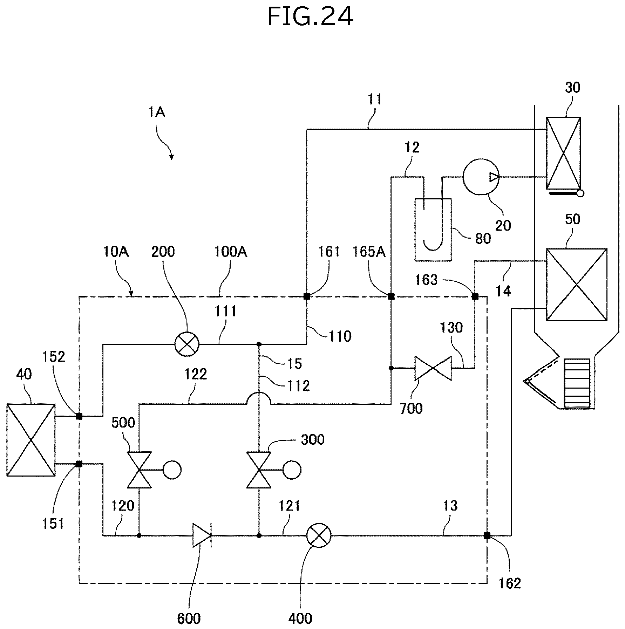

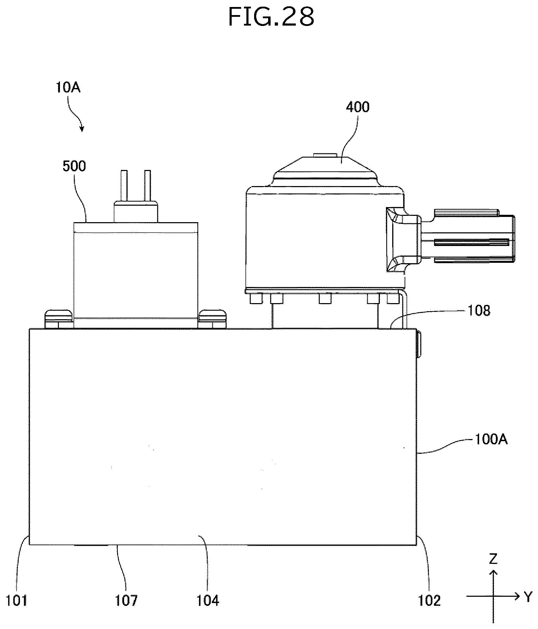

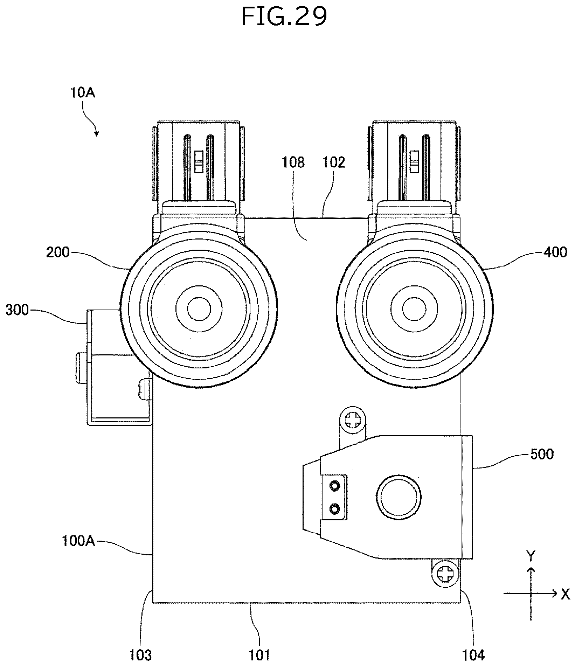

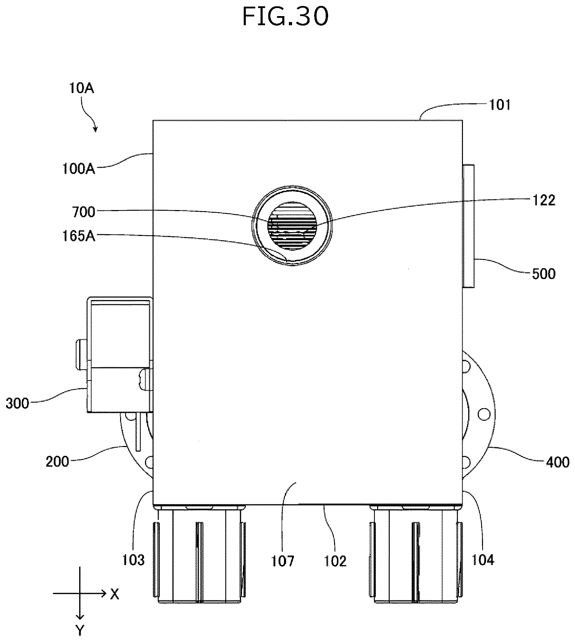

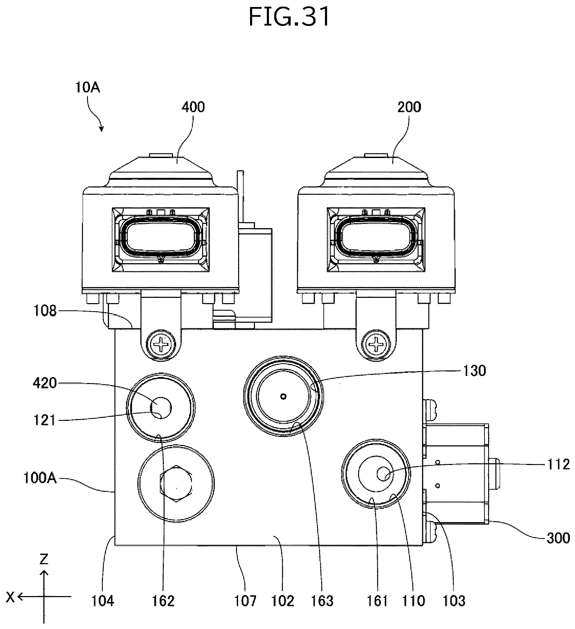

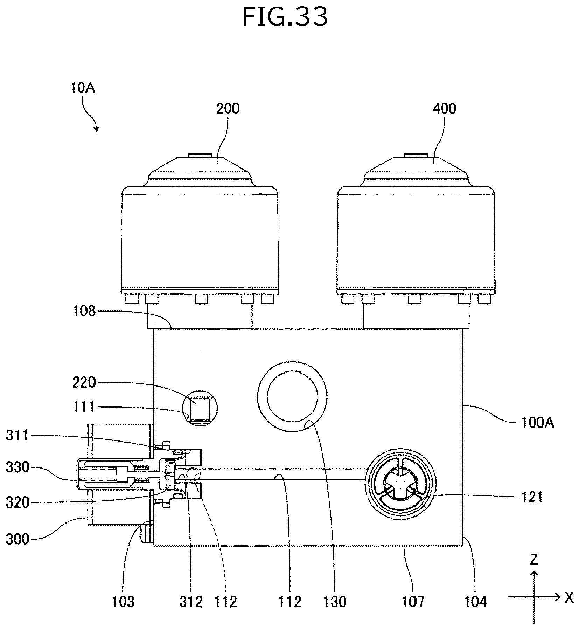

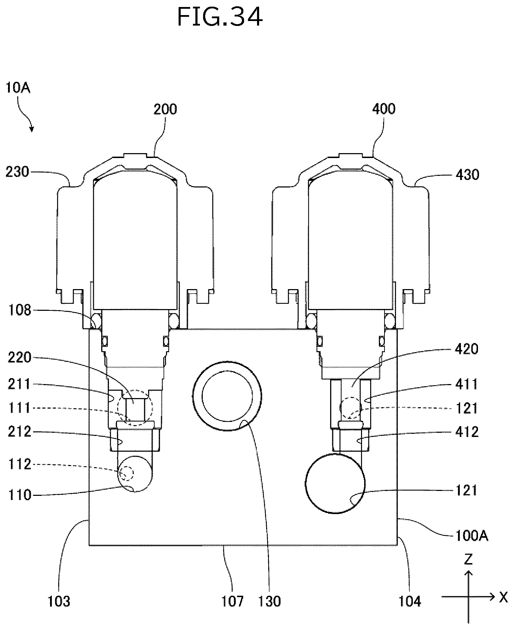

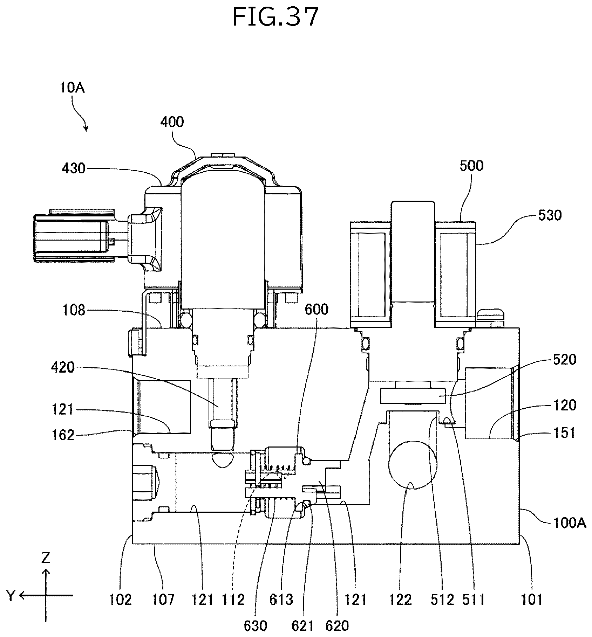

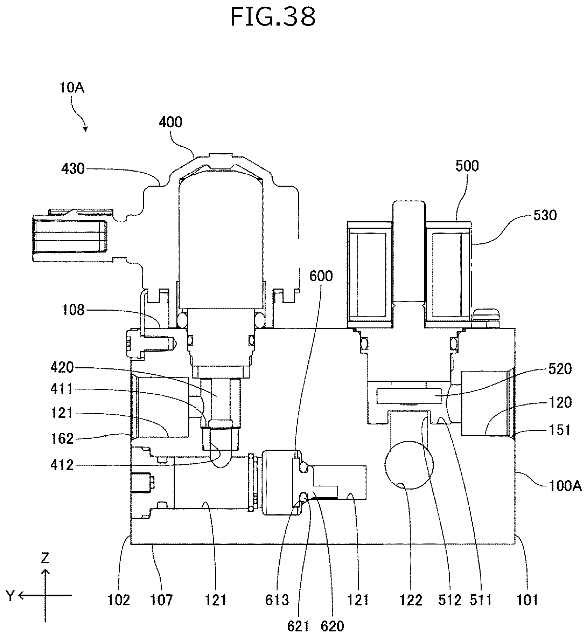

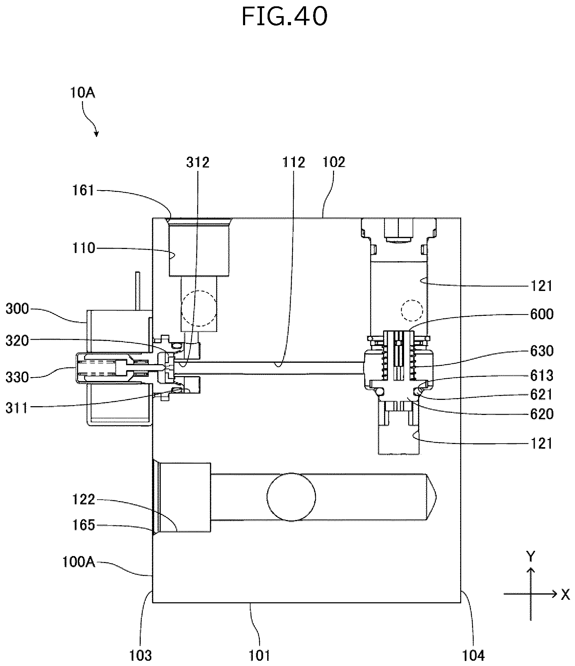

An air conditioning device according to a second embodiment of the present invention is described below with reference to Fig. 24 to Fig. 42. The air conditioning device according to the second embodiment is also a vehicle air conditioning device.

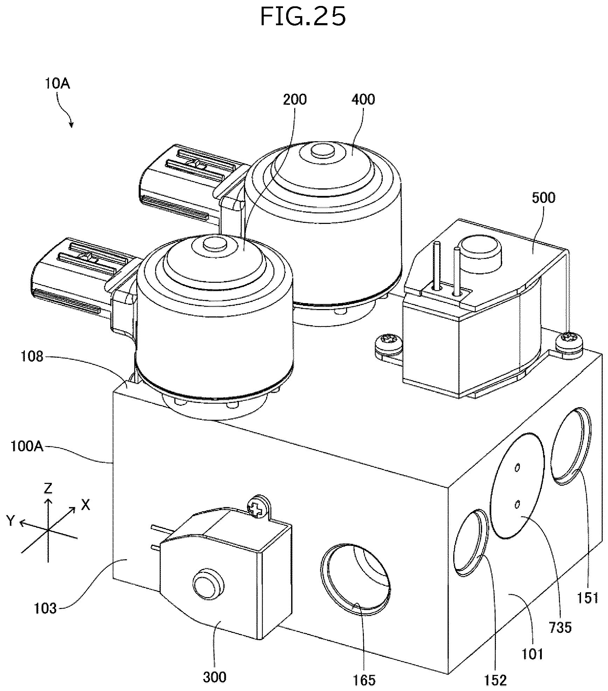

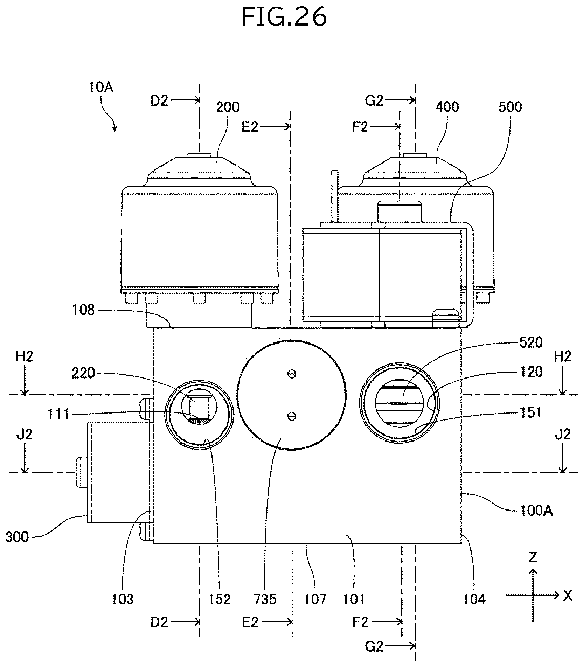

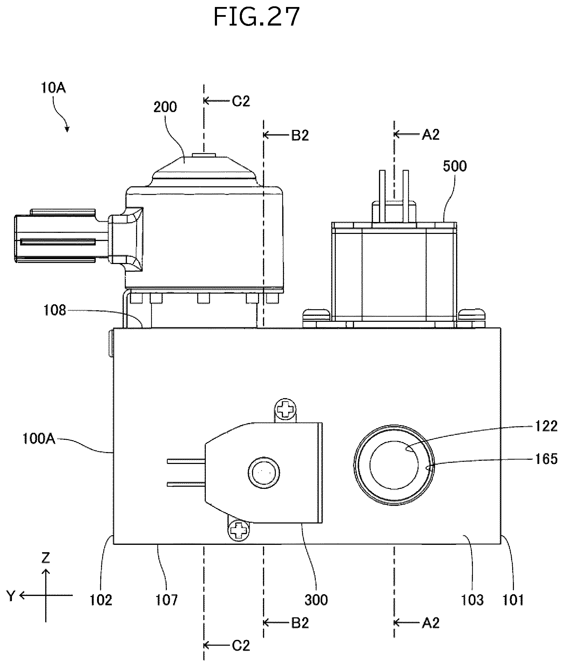

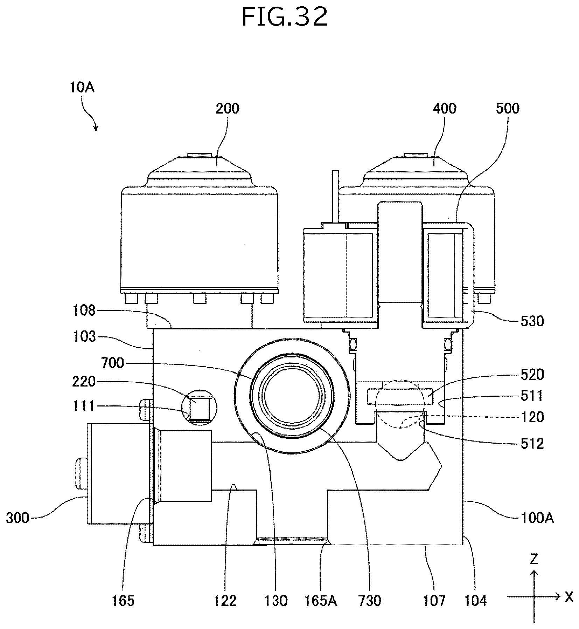

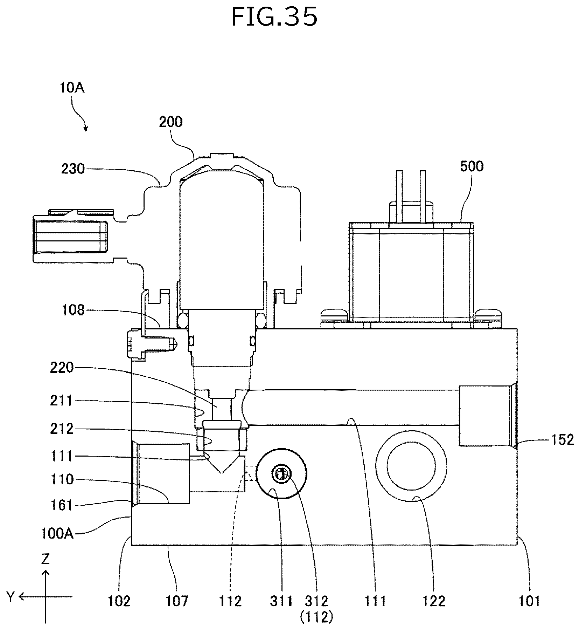

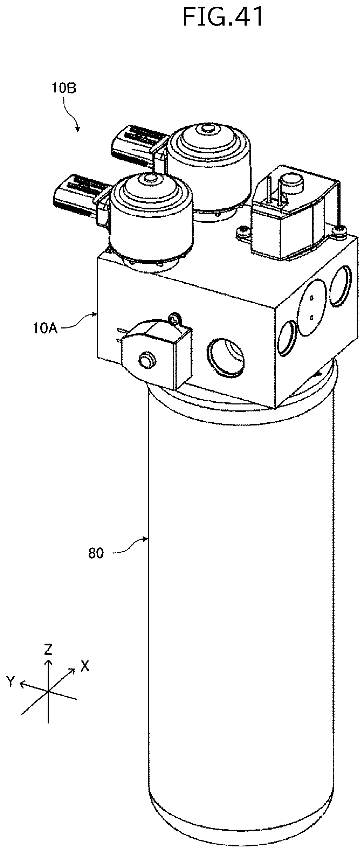

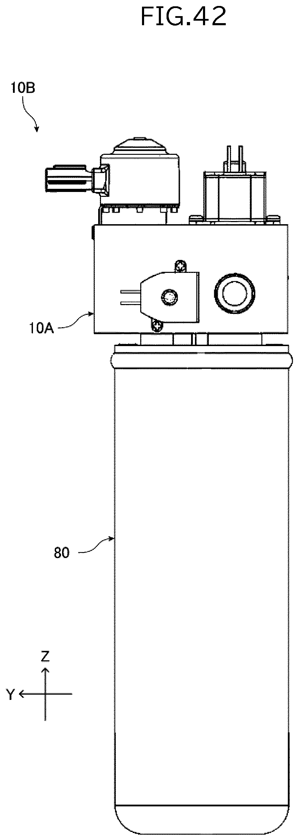

Fig. 24 is a diagram illustrating a schematic configuration of the air conditioning device according to the second embodiment of the present invention. Fig. 25 to Fig. 31 are a perspective view, a front view, a left-side view, a right-side view, a plan view, a bottom view, and a back view of a valve device of the air conditioning device in Fig. 24. Fig. 32 to Fig. 34 are a sectional view taken along line A2-A2, a sectional view taken along line B2-B2, and a sectional view taken along line C2-C2 of Fig. 27. Fig. 35 to Fig. 40 are a sectional view taken along line D2-D2, a sectional view taken along line E2-E2, a sectional view taken along line F2-F2, a sectional view taken along line G2-G2, a sectional view taken along line H2-H2, and a sectional view taken along line J2-J2 of Fig. 26. Fig. 41 and Fig. 42 are a perspective view and a left-side view illustrating a configuration of a modification of the valve device in Fig. 25. In each figure, an X direction indicated by arrow X represents a left-and-right direction (lateral direction), a Y direction indicated by arrow Y represents a front-and-back direction, and a Z direction indicated by arrow Z represents an up-and-down direction. The direction with the letter **"**X**"** on arrow X represents the right direction, the direction with the letter **"**Y**"** on arrow Y represents the backward direction, and the direction with the letter **"**Z**"** on arrow Z represents the upward direction.

As illustrated in Fig. 24, an air conditioning device 1A according to the second embodiment includes a valve device 10A, a compressor 20, an indoor condenser 30, an outdoor heat exchanger 40, an indoor evaporator 50, and an accumulator 80. The air conditioning device 1A includes a first refrigerant passage 11, a second refrigerant passage 12, a third refrigerant passage 13, a fourth refrigerant passage 14, and a bypass passage 15.

The air conditioning device 1A has the same (including substantially the same) configuration as that of the air conditioning device 1 according to the first embodiment except that the air conditioning device 1A includes, instead of the valve device 10 and the pressure control valve 70, the valve device 10A with a pressure control valve unit 700. In the description below, elements having the same configurations as those of the air conditioning device 1 are denoted by the same reference signs as those of the air conditioning device 1, and detailed descriptions of these elements are omitted.

The valve device 10A opens and closes the first refrigerant passage 11, the second refrigerant passage 12, the third refrigerant passage 13, and the bypass passage 15 to form refrigerant circuits corresponding to operation modes. Additionally, the valve device 10A controls the flow rate of refrigerant flowing through the first refrigerant passage 11 and the flow rate of refrigerant flowing through the third refrigerant passage 13. Additionally, the valve device 10A controls pressure of refrigerant flowing through the fourth refrigerant passage 14.

As illustrated in Fig. 25 to Fig. 40, the valve device 10A includes a valve body 100A, a high-pressure flow control valve unit 200, a high-pressure on-off valve unit 300, a low-pressure flow control valve unit 400, a low-pressure on-off valve unit 500, a check valve unit 600, and the pressure control valve unit 700.

The valve body 100A is formed, for example, by extruding an aluminum alloy. The valve body 100A has a rectangular parallelepiped shape. The valve body 100A includes a front surface 101, a back surface 102, a left surface 103, a right surface 104, a bottom surface 107, and an upper surface 108. Each surface is flat. The front surface 101 and the back surface 102 are parallel to each other. The left surface 103 and the right surface 104 are parallel to each other. The left surface 103 is at a right angle to the front surface 101. The bottom surface 107 and the upper surface 108 are parallel to each other. The upper surface 108 is at a right angle to the front surface 101 and is at a right angle to the left surface 103.

The high-pressure flow control valve unit 200, the low-pressure flow control valve unit 400, and the low-pressure on-off valve unit 500 are disposed on the upper surface 108. The high-pressure on-off valve unit 300 is disposed on the left surface 103.

The front surface 101 includes a first outdoor-side opening 151 and a second outdoor-side opening 152. The back surface 102 includes a first indoor-side opening 161, a second indoor-side opening 162, and a third indoor-side opening 163. The left surface 103 includes a refrigerant return opening 165. The bottom surface 107 includes a refrigerant return opening 165A.

The first outdoor-side opening 151 is connected to an outlet of the outdoor heat exchanger 40. The second outdoor-side opening 152 is connected to an inlet of the outdoor heat exchanger 40. The first indoor-side opening 161 is connected to an outlet of the indoor condenser 30. The second indoor-side opening 162 is connected to an inlet of the indoor evaporator 50. The third indoor-side opening 163 is connected to an outlet of the indoor evaporator 50. The refrigerant return opening 165A is connected to an inlet of the accumulator 80. The refrigerant return opening 165 is, for example, closed by a lid member, or connected to the downstream end of another refrigerant passage through which refrigerant is circulated by the compressor 20.

The valve body 100A includes a main high-pressure-refrigerant passage 110, a first branch high-pressure-refrigerant passage 111, a second branch high-pressure-refrigerant passage 112, a main low-pressure-refrigerant passage 120, a first branch low-pressure-refrigerant passage 121, and a second branch low-pressure-refrigerant passage 122, each formed by cutting. The main high-pressure-refrigerant passage 110 is connected to the first branch high-pressure-refrigerant passage 111 and the second branch high-pressure-refrigerant passage 112. The main low-pressure-refrigerant passage 120 is connected to the first branch low-pressure-refrigerant passage 121 and the second branch low-pressure-refrigerant passage 122. The high-pressure flow control valve unit 200 is disposed in the first branch high-pressure-refrigerant passage 111. The high-pressure on-off valve unit 300 is disposed in the second branch high-pressure-refrigerant passage 112. The check valve unit 600 and the low-pressure flow control valve unit 400 are disposed in the first branch low-pressure-refrigerant passage 121. The check valve unit 600 is nearer the main low-pressure-refrigerant passage 120 than the low-pressure flow control valve unit 400 is. The low-pressure on-off valve unit 500 is disposed in the second branch low-pressure-refrigerant passage 122.

The valve body 100A includes a pressure control refrigerant passage 130. The second branch low-pressure-refrigerant passage 122 includes a point connected to a first end of the pressure control refrigerant passage 130, and the point is a downstream end of the second branch low-pressure-refrigerant passage 122 or a point near the downstream end and is further from the main low-pressure-refrigerant passage 120 than the low-pressure on-off valve unit 500 is. A second end of the pressure control refrigerant passage 130 is connected to the third indoor-side opening 163. The pressure control valve unit 700 is disposed in the pressure control refrigerant passage 130. The pressure control valve unit 700 has the same (including substantially the same) function as that of the pressure control valve 70 of the air conditioning device 1 according to the first embodiment. The pressure control refrigerant passage 130 constitutes a part of the fourth refrigerant passage 14.

The pressure control valve unit 700 is configured to maintain pressure of refrigerant flowing into the pressure control refrigerant passage 130 from the third indoor-side opening 163, that is, pressure of refrigerant inside the indoor evaporator 50, at a set value or higher. The pressure control valve unit 700 inhibits pressure of refrigerant inside the indoor evaporator 50 from being lower than the set value when the cooling load is reduced in the cooling operation mode. The set value is a pressure value set to inhibit the indoor evaporator 50 from being frosted.

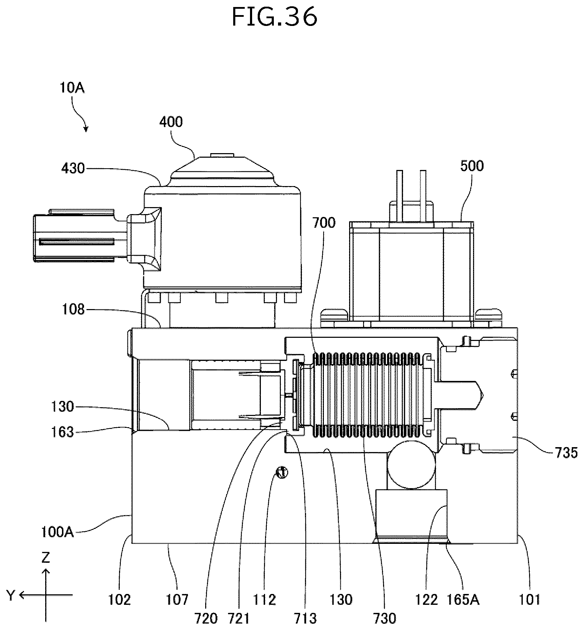

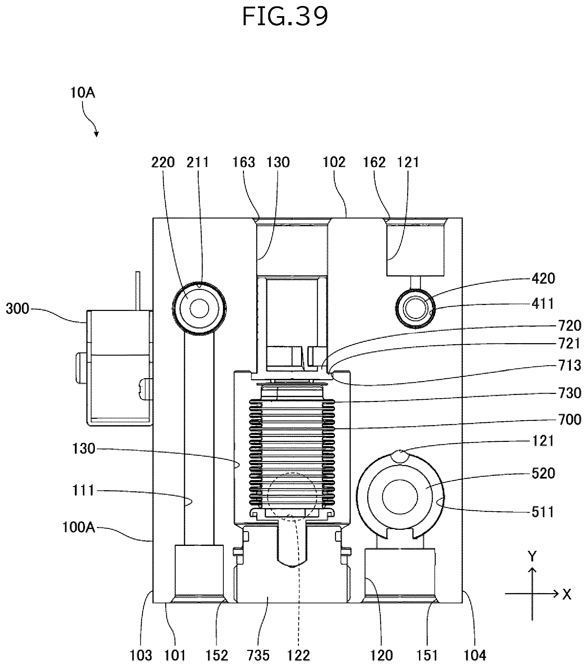

The pressure control valve unit 700 constitutes a pressure control valve together with the valve body 100A. As illustrated in Fig. 36 and Fig. 39, the valve body 100A includes a valve seat 713, which has a circular annular shape and is disposed in the pressure control refrigerant passage 130. The pressure control valve unit 700 includes a valve member 720 and a bellows 730. The valve member 720 is disposed in the pressure control refrigerant passage 130 and can move in a direction of refrigerant flow (the front-and-back direction). The valve member 720 includes a valve portion 721 having a circular annular shape. The bellows 730 has a bellows shape and can expand and contract. The first end of the bellows 730 is connected to the valve member 720. The second end of the bellows 730 is connected to an adjusting screw 735 for changing the set value. The set value of the pressure control valve unit 700 is determined according to the distance between the adjusting screw 735 and the valve seat 713 (i.e., the degree of compression of the bellows 730).

In the pressure control valve unit 700, when pressure of refrigerant flowing into the pressure control refrigerant passage 130 from the third indoor-side opening 163 is smaller than the set value, the valve portion 721 comes into contact with the valve seat 713, and the flow rate of refrigerant flowing through the pressure control refrigerant passage 130 is reduced (or the flow rate is zero).

In the pressure control valve unit 700, when pressure of refrigerant flowing into the pressure control refrigerant passage 130 from the third indoor-side opening 163 is at the set value or higher, the valve portion 721 moves away from the valve seat 713, and the flow rate of refrigerant flowing through the pressure control refrigerant passage 130 increases.

As described above, the valve device 10A of the air conditioning device 1A according to the present embodiment includes the valve body 100A, the high-pressure flow control valve unit 200, the high-pressure on-off valve unit 300, the low-pressure flow control valve unit 400, the low-pressure on-off valve unit 500, the check valve unit 600, and the pressure control valve unit 700. The valve body 100A includes the main high-pressure-refrigerant passage 110, the first branch high-pressure-refrigerant passage 111 that is connected to the main high-pressure-refrigerant passage 110, the second branch high-pressure-refrigerant passage 112 that is connected to the main high-pressure-refrigerant passage 110, the main low-pressure-refrigerant passage 120, the first branch low-pressure-refrigerant passage 121 that is connected to the main low-pressure-refrigerant passage 120, the second branch low-pressure-refrigerant passage 122 that is connected to the main low-pressure-refrigerant passage 120, and the pressure control refrigerant passage 130. The high-pressure flow control valve unit 200 is configured to change the passage area of the first branch high-pressure-refrigerant passage 111 in a stepless manner. The high-pressure on-off valve unit 300 is configured to open and close the second branch high-pressure-refrigerant passage 112. The low-pressure flow control valve unit 400 is configured to change the passage area of the first branch low-pressure-refrigerant passage 121 in a stepless manner. The low-pressure on-off valve unit 500 is configured to open and close the second branch low-pressure-refrigerant passage 122. The check valve unit 600 is disposed in the first branch low-pressure-refrigerant passage 121 and is nearer the main low-pressure-refrigerant passage 120 than the low-pressure flow control valve unit 400 is. The check valve unit 600 allows refrigerant to flow from the main low-pressure-refrigerant passage 120 to the low-pressure flow control valve unit 400 and restricts refrigerant from flowing from the low-pressure flow control valve unit 400 to the main low-pressure-refrigerant passage 120. The second branch high-pressure-refrigerant passage 112 connects the main high-pressure-refrigerant passage 110 and a point in the first branch low-pressure-refrigerant passage 121, and the point is between the check valve unit 600 and the low-pressure flow control valve unit 400. The first end of the pressure control refrigerant passage 130 is connected to the point in the second branch low-pressure-refrigerant passage 122, and the point is further from the main low-pressure-refrigerant passage 120 than the low-pressure on-off valve unit 500 is. The pressure control valve unit 700 is disposed in the pressure control refrigerant passage 130, and is configured to maintain pressure of refrigerant in the second end of the pressure control refrigerant passage 130 at the set value or higher.

The valve body 100A includes the front surface 101 and the back surface 102 that are parallel to each other, the left surface 103 and the right surface 104 that are parallel to each other, and the upper surface 108 and the bottom surface 107 that are parallel to each other. The left surface 103 is at a right angle to the front surface 101. The upper surface 108 is at a right angle to the front surface 101 and is at a right angle to the left surface 103. The high-pressure flow control valve unit 200, the low-pressure flow control valve unit 400, and the low-pressure on-off valve unit 500 are disposed on the upper surface 108. The high-pressure on-off valve unit 300 is disposed on the left surface 103. The front surface 101 includes the first outdoor-side opening 151 that is connected to the main low-pressure-refrigerant passage 120, and the second outdoor-side opening 152 that is connected to the point in the first branch high-pressure-refrigerant passage 111, and the point is further from the main high-pressure-refrigerant passage 110 than the high-pressure flow control valve unit 200 is. The back surface 102 includes the first indoor-side opening 161 that is connected to the main high-pressure-refrigerant passage 110, the second indoor-side opening 162 that is connected to the point in the first branch low-pressure-refrigerant passage 121, and the third indoor-side opening 163 that is connected to the second end of the pressure control refrigerant passage 130, and the point is further from the main low-pressure-refrigerant passage 120 than the low-pressure flow control valve unit 400 is. The left surface 103 includes the refrigerant return opening 165 that is connected to the point in the second branch low-pressure-refrigerant passage 122, and the point is further from the main low-pressure-refrigerant passage 120 than the low-pressure on-off valve unit 500 is. The bottom surface 107 includes the refrigerant return opening 165A that is connected to the point in the second branch low-pressure-refrigerant passage 122, and the point is further from the main low-pressure-refrigerant passage 120 than the low-pressure on-off valve unit 500 is. The first outdoor-side opening 151 is connected to the outlet of the outdoor heat exchanger 40. The second outdoor-side opening 152 is connected to the inlet of the outdoor heat exchanger 40. The first indoor-side opening 161 is connected to the outlet of the indoor condenser 30. The second indoor-side opening 162 is connected to the inlet of the indoor evaporator 50. The third indoor-side opening 163 is connected to the outlet of the indoor evaporator 50. The refrigerant return opening 165A is connected to the inlet of the accumulator 80.

The air conditioning device 1A and the valve device 10A according to the second embodiment also have the same (including substantially the same) functions and effects as those of the air conditioning device 1 and the valve device 10 according to the first embodiment.

A valve device 10B illustrated in Fig. 41 and Fig. 42 is a modification of the valve device 10A described above.

The valve device 10B includes a valve device 10A and an accumulator 80. In the valve device 10B, an inlet of the accumulator 80 is connected directly to a refrigerant return opening 165A of the valve device 10A, and the accumulator 80 is secured to a valve body 100A. The accumulator 80 has a circular cylindrical shape. The accumulator 80 has the inlet at its upper part. The accumulator 80 has an outlet that is connected to an inlet of a compressor 20. The valve device 10B can omit a pipe for connecting to the accumulator 80. The air conditioning device 1A may employ the valve device 10B, instead of the valve device 10A and the accumulator 80. This enables the suppression of pressure loss of refrigerant in the air conditioning device 1A and can reduce the amount of refrigerant used in the air conditioning device 1A.

### (Third Embodiment)

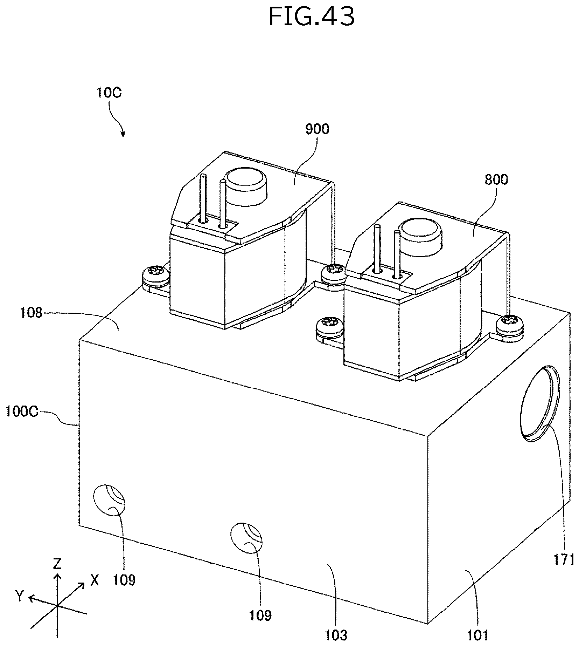

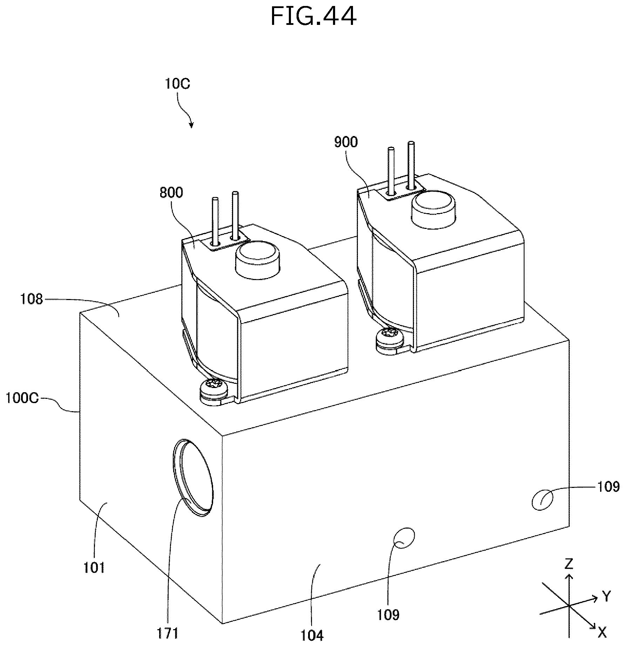

A valve device according to a third embodiment of the present invention is described below with reference to Fig. 43 to Fig. 48.

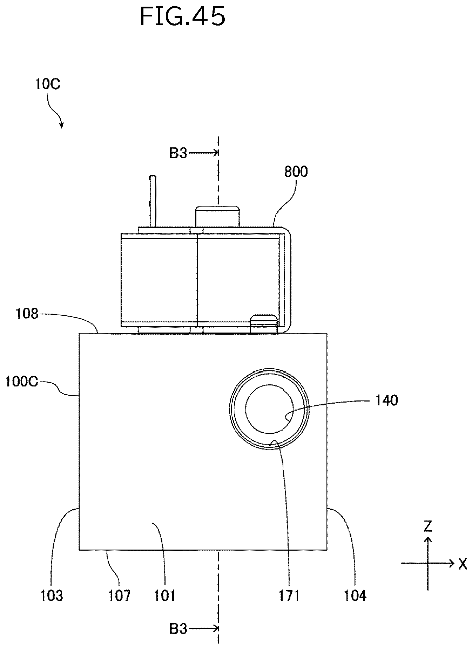

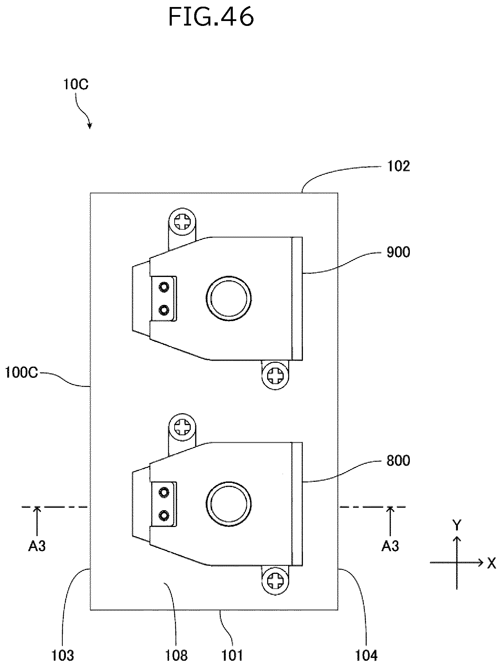

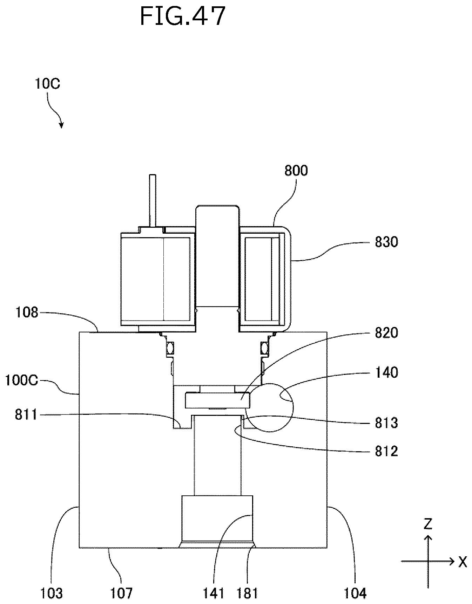

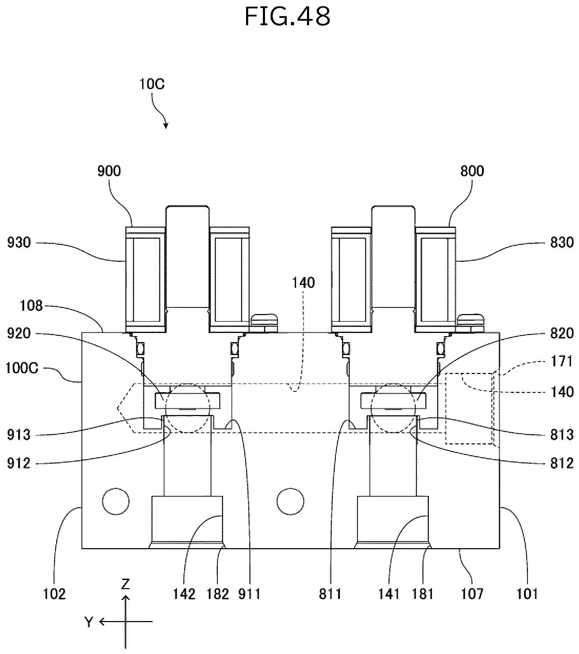

Fig. 43 to Fig. 46 are a perspective view, another perspective view, a front view, and a plan view of the valve device according to the third embodiment of the present invention. Fig. 47 is a sectional view taken along line A3-A3 of Fig. 46. Fig. 48 is a sectional view taken along line B3-B3 of Fig. 45. In each figure, an X direction indicated by arrow X represents a left-and-right direction (lateral direction), a Y direction indicated by arrow Y represents a front-and-back direction, and a Z direction indicated by arrow Z represents an up-and-down direction. The direction with the letter "X" on arrow X represents the right direction, the direction with the letter "Y" on arrow Y represents the backward direction, and the direction with the letter "Z" on arrow Z represents the upward direction.

As illustrated in Fig. 43 to Fig. 48, a valve device 10C according to the third embodiment includes a valve body 100C, a first on-off valve unit 800, and a second on-off valve unit 900.

The valve body 100C is formed, for example, by extruding an aluminum alloy. The valve body 100C has a rectangular parallelepiped shape. The valve body 100C includes a front surface 101, a back surface 102, a left surface 103, a right surface 104, an upper surface 108, and a bottom surface 107. Each surface is flat. The front surface 101 and the back surface 102 are parallel to each other. The left surface 103 and the right surface 104 are parallel to each other. The left surface 103 is at a right angle to the front surface 101. The upper surface 108 and the bottom surface 107 are parallel to each other. The upper surface 108 is at a right angle to the front surface 101 and is at a right angle to the left surface 103. The bottom surface 107 is at a right angle to the front surface 101 and is at a right angle to the left surface 103. The valve body 100C has screw holes 109 that extend from the left surface 103 to the right surface 104.

The front surface 101 includes an inlet opening 171. The bottom surface 107 includes a first outlet opening 181 and a second outlet opening 182.

The valve body 100C includes refrigerant passages formed by cutting. Specifically, the valve body 100C includes a main refrigerant passage 140, a first branch refrigerant passage 141, and a second branch refrigerant passage 142.

The main refrigerant passage 140 is connected to the inlet opening 171. The main refrigerant passage 140 is connected to the first branch refrigerant passage 141 and the second branch refrigerant passage 142. Refrigerant flows from the main refrigerant passage 140 to the first branch refrigerant passage 141 and the second branch refrigerant passage 142.

The first on-off valve unit 800 is disposed in the first branch refrigerant passage 141. The first branch refrigerant passage 141 includes a point connected to the first outlet opening 181, and the point is a downstream end of the first branch refrigerant passage 141 and is further from the main refrigerant passage 140 than the first on-off valve unit 800 is. The first on-off valve unit 800 is a first valve unit.

The second on-off valve unit 900 is disposed in the second branch refrigerant passage 142. The second branch refrigerant passage 142 includes a point connected to the second outlet opening 182, and the point is a downstream end of the second branch refrigerant passage 142 and is further from the main refrigerant passage 140 than the second on-off valve unit 900 is. The second on-off valve unit 900 is a second valve unit.

The first on-off valve unit 800 is disposed in the upper surface 108, near the front surface 101. The first on-off valve unit 800 can open and close the first branch refrigerant passage 141. That is, the first on-off valve unit 800 can change the passage area of the first branch refrigerant passage 141 to zero or to an area greater than zero.

The first on-off valve unit 800 constitutes a pilot type on-off valve together with the valve body 100C. As illustrated in Fig. 47 and Fig. 48, the valve body 100C includes a main valve chamber 811, a main valve port 812 that is open to the main valve chamber 811, and a main valve seat 813 that encloses the main valve port 812. The main valve chamber 811 and the main valve port 812 are disposed in series in the first branch refrigerant passage 141. The main valve chamber 811 and the main valve port 812 substantially constitute a part of the first branch refrigerant passage 141. In the first branch refrigerant passage 141, the main valve chamber 811 is nearer the main refrigerant passage 140 than the main valve port 812 is. In the present embodiment, the main valve chamber 811 is connected directly to the main refrigerant passage 140.

The first on-off valve unit 800 includes a main valve member 820 and a valve-member-driving section 830. Since the main valve member 820 and the valve-member-driving section 830 have the same (including substantially the same) configuration as that of the valve main valve member 520 and the valve-member-driving section 530 of the low-pressure on-off valve unit 500 of the first embodiment, their detailed descriptions are omitted.

The second on-off valve unit 900 is disposed in the upper surface 108, near the back surface 102. The second on-off valve unit 900 can open and close the second branch refrigerant passage 142. That is, the second on-off valve unit 900 can change the passage area of the second branch refrigerant passage 142 to zero or to an area greater than zero.

The second on-off valve unit 900 constitutes a pilot type on-off valve together with the valve body 100C. As illustrated in Fig. 48, the valve body 100C includes a main valve chamber 911, a main valve port 912 that is open to the main valve chamber 911, and a main valve seat 913 that encloses the main valve port 912. The main valve chamber 911 and the main valve port 912 are disposed in series in the second branch refrigerant passage 142. The main valve chamber 911 and the main valve port 912 substantially constitute a part of the second branch refrigerant passage 142. In the second branch refrigerant passage 142, the main valve chamber 911 is nearer the main refrigerant passage 140 than the main valve port 912 is. In the present embodiment, the main valve chamber 911 is connected directly to the main refrigerant passage 140.

The second on-off valve unit 900 incudes a main valve member 920 and a valve-member-driving section 930. Since the main valve member 920 and the valve-member-driving section 930 have the same (including substantially the same) configuration as that of the valve main valve member 520 and the valve-member-driving section 530 of the low-pressure on-off valve unit 500 of the first embodiment, their detailed descriptions are omitted.

The valve device 10C according to the third embodiment, which is not according to the invention, also has the same (including substantially the same) functions and effects as those of the valve device 10 according to the first embodiment.

The valve device 10C described above has two on-off valve units, however, the valve device 10C may include three or more valve units. The valve device 10C may employ a flow control valve unit such as the high-pressure flow control valve unit 200 of the first embodiment, instead of one or both of the on-off valve units.

In this specification, terms indicating shapes, such as "circular cylindrical" and "circular columnar", are also used for members and portions of the members substantially having the shapes indicated by the terms. For example, "a circular cylindrical member" includes a circular cylindrical member and a substantially circular cylindrical member.

### Reference Signs List

### (First Embodiment, Second Embodiment)

1 ··· air conditioning device, 1A ··· air conditioning device, 10 ··· valve device, 10A ··· valve device, 10B ··· valve device, 11 ··· first refrigerant passage, 12 ··· second refrigerant passage, 13 ··· third refrigerant passage, 14 ··· fourth refrigerant passage, 15 ··· bypass passage, 20 ··· compressor, 30 ··· indoor condenser, 40 ··· outdoor heat exchanger, 50 ··· indoor evaporator, 70 ··· pressure control valve, 80 ··· accumulator, 100 ··· valve body, 100A ··· valve body, 101 ··· front surface, 102 ··· back surface, 103 ··· left surface, 104 ··· right surface, 105 ··· first upper surface, 106 ··· second upper surface, 107 ··· bottom surface, 108 ··· upper surface, 110 ··· main high-pressure-refrigerant passage, 111 ··· first branch high-pressure-refrigerant passage, 112 ··· second branch high-pressure-refrigerant passage, 120 ··· main low-pressure-refrigerant passage, 121 ··· first branch low-pressure-refrigerant passage, 122 ··· second branch low-pressure-refrigerant passage, 130 ··· pressure control refrigerant passage, 151 ··· first outdoor-side opening, 152 ··· second outdoor-side opening, 161 ··· first indoor-side opening, 162 ··· second indoor-side opening, 163 ··· third indoor-side opening, 165 ··· refrigerant return opening, 165A ··· refrigerant return opening, 200 ··· high-pressure flow control valve unit, 200A ··· high-pressure flow control valve unit, 210 ··· case, 211 ··· valve chamber, 212 ··· valve port, 220 ··· valve member, 221 ··· stem, 222 ··· valve portion, 223 ··· spring receiving portion, 224 ··· ball receiving portion, 230 ··· valve-member-driving section, 240 ··· holder, 242 ··· driving shaft supporting member, 242a ··· internal thread, 244 ··· valve member supporting member, 244a ··· valve member supporting hole, 246 ··· valve opening spring, 250 ··· can, 251 ··· annular member, 260 ··· rotor, 262 ··· connecting member, 263 ··· rotor shaft, 270 ··· planetary gear mechanism, 271 ··· fixed ring gear, 272 ··· sun gear, 273 ··· planetary gear, 274 ··· carrier, 275 ··· output gear, 276 ··· output shaft, 276a ··· slit, 282 ··· driving shaft, 282a ··· external thread, 282b ··· flat plate portion, 284 ··· ball, 290 ··· stator unit, 300 ··· high-pressure on-off valve unit, 311 ··· main valve chamber, 312 ··· main valve port, 313 ··· main valve seat, 314 ··· back pressure chamber, 320 ··· main valve member, 325 ··· pilot passage, 326 ··· pressure equalizing passage, 330 ··· valve-member-driving section, 331 ··· fixed core, 331a ··· large-diameter cylindrical portion, 331b ··· small-diameter cylindrical portion, 332 ··· case, 333 ··· plunger, 333a ··· through hole, 334 ··· electromagnetic coil, 335 ··· pilot valve member, 335a ··· pilot valve portion, 336 ··· spring receiving member, 337 ··· valve opening spring, 338 ··· first plunger spring, 339 ··· second plunger spring, 400 ··· low-pressure flow control valve unit, 411 ··· valve chamber, 412 ··· valve port, 420 ··· valve member, 430 ··· valve-member-driving section, 500 ··· low-pressure on-off valve unit, 511 ··· main valve chamber, 512 ··· main valve port, 513 ··· main valve seat, 514 ··· back pressure chamber, 520 ··· main valve member, 521 ··· body portion, 522 ··· upper flange portion, 523 ··· lower flange portion, 525 ··· pilot passage, 526 ··· pressure equalizing passage, 530 ··· valve-member-driving section, 531 ··· fixed core, 531a ··· large-diameter cylindrical portion, 531b ··· small-diameter cylindrical portion, 532 ··· case, 533 ··· plunger, 534 ··· electromagnetic coil, 535 ··· pilot valve member, 535a ··· pilot valve portion, 536 ··· valve shaft, 537 ··· valve opening spring, 538 ··· plunger spring, 600 ··· check valve unit, 613 ··· valve seat, 620 ··· valve member, 621 ··· valve portion, 630 ··· valve closing spring, 700 ··· pressure control valve unit, 713 ··· valve seat, 720 ··· valve member, 721 ··· valve portion, 730 ··· bellows, 735 ··· adjusting screw

### (Third Embodiment)

10C ··· valve device, 100C ··· valve body, 101 ··· front surface, 102 ··· back surface, 103 ··· left surface, 104 ··· right surface, 107 ··· bottom surface, 108 ··· upper surface, 109 ··· screw hole, 140 ··· main refrigerant passage, 141 ··· first branch refrigerant passage, 142 ··· second branch refrigerant passage, 171 ··· inlet opening, 181 ··· first outlet opening, 182 ··· second outlet opening, 800 ··· first on-off valve unit, 811 ··· main valve chamber, 812 ··· main valve port, 813 ··· main valve seat, 820 ··· main valve member, 830 ··· valve-member-driving section, 900 ··· second on-off valve unit, 911 ··· main valve chamber, 912 ··· main valve port, 913 ··· main valve seat, 920 ··· main valve member, 930 ··· valve-member-driving section

## Claims

1. A valve device (10, 10A, 10B) comprising:
a valve body (100) including refrigerant passages; and
valve units mounted on the valve body (100),
wherein the refrigerant passages include
a main high-pressure-refrigerant passage (110), a first branch high-pressure-refrigerant passage (111) that is connected to the main high-pressure-refrigerant passage (110), a second branch high-pressure-refrigerant passage (112) that is connected to the main high-pressure-refrigerant passage (110), a main low-pressure-refrigerant passage (120), a first branch low-pressure-refrigerant passage (121) that is connected to the main low-pressure-refrigerant passage (120), and a second branch low-pressure-refrigerant passage (122) that is connected to the main low-pressure-refrigerant passage (120),
wherein the valve units include
a high-pressure flow control valve unit (200) configured to change a passage area of the first branch high-pressure-refrigerant passage (111), a high-pressure on-off valve unit (300) configured to open and close the second branch high-pressure-refrigerant passage (112), a low-pressure flow control valve unit (400) configured to change a passage area of the first branch low-pressure-refrigerant passage (121), a low-pressure on-off valve unit (500) configured to open and close the second branch low-pressure-refrigerant passage (122), and a check valve unit (600) that is disposed at a point in the first branch low-pressure-refrigerant passage (121), the point being nearer the main low-pressure-refrigerant passage (120) than the low-pressure flow control valve unit (400) is,
wherein the check valve unit (600) allows refrigerant to flow from the main low-pressure-refrigerant passage (120) to the low-pressure flow control valve unit (400) and restricts refrigerant from flowing from the low-pressure flow control valve unit (400) to the main low-pressure-refrigerant passage (120),
wherein the second branch high-pressure-refrigerant passage (112) connects the main high-pressure-refrigerant passage (110) to a point in the first branch low-pressure-refrigerant passage (121), the point being between the check valve unit (600) and the low-pressure flow control valve unit (400),
**characterized in that**
the refrigerant passages include a pressure control refrigerant passage (130),
and the valve units include a pressure control valve unit (700) that is disposed in the pressure control refrigerant passage (130),
and the pressure control refrigerant passage (130) includes a first end that is connected to a point in the second branch low-pressure-refrigerant passage (122), the point being further from the main low-pressure-refrigerant passage (120) than the low-pressure on-off valve unit (500) is, and
and **in that** the pressure control valve unit maintains pressure of refrigerant at a second end of the pressure control refrigerant passage (130) at a set value or higher.

2. The valve device (10, 10A, 10B) according to Claim 1 further comprising:
an accumulator (80) that is mounted on the valve body (100) and separates refrigerant into gas and liquid phases,
wherein the accumulator (80) includes an inlet that is connected to a point in the second branch low-pressure-refrigerant passage (122), the point being further from the main low-pressure-refrigerant passage (120) than the low-pressure on-off valve unit (500) is.

3. A valve device (10, 10A, 10B) comprising:
a valve body (100) including refrigerant passages; and
valve units mounted on the valve body (100),
wherein the refrigerant passages include
a main high-pressure-refrigerant passage (110), a first branch high-pressure-refrigerant passage (111) that is connected to the main high-pressure-refrigerant passage (110), a second branch high-pressure-refrigerant passage (112) that is connected to the main high-pressure-refrigerant passage (110), a main low-pressure-refrigerant passage (120), a first branch low-pressure-refrigerant passage (121) that is connected to the main low-pressure-refrigerant passage (120), and a second branch low-pressure-refrigerant passage (122) that is connected to the main low-pressure-refrigerant passage (120),
wherein the valve units include
a high-pressure flow control valve unit (200) configured to change a passage area of the first branch high-pressure-refrigerant passage (111), a high-pressure on-off valve unit (300) configured to open and close the second branch high-pressure-refrigerant passage (112), a low-pressure flow control valve unit (400) configured to change a passage area of the first branch low-pressure-refrigerant passage (121), a low-pressure on-off valve unit (500) configured to open and close the second branch low-pressure-refrigerant passage (122), and a check valve unit (600) that is disposed at a point in the first branch low-pressure-refrigerant passage (121), the point being nearer the main low-pressure-refrigerant passage (120) than the low-pressure flow control valve unit (400) is,
wherein the check valve unit (600) allows refrigerant to flow from the main low-pressure-refrigerant passage (120) to the low-pressure flow control valve unit (400) and restricts refrigerant from flowing from the low-pressure flow control valve unit (400) to the main low-pressure-refrigerant passage (120),
wherein the second branch high-pressure-refrigerant passage (112) connects the main high-pressure-refrigerant passage (110) to a point in the first branch low-pressure-refrigerant passage (121), the point being between the check valve unit (600) and the low-pressure flow control valve unit (400),
wherein the valve body (100) includes front and back surfaces (101, 102) parallel to each other, left and right surfaces (103, 104) parallel to each other, and upper and bottom surfaces (107, 108) parallel to each other,
wherein the left surface (103) is at a right angle to the front surface (101),
wherein the upper surface (108) is at a right angle to the front surface (101) and is at a right angle to the left surface (103),
**characterized in that**
the high-pressure flow control valve unit (200), the low-pressure flow control valve unit (400), and the low-pressure on-off valve unit (500) are disposed on the upper surface (108),
and the high-pressure on-off valve unit (300) is disposed on the left surface (103),
and the front surface (101) includes a first outdoor-side opening (151) that is connected to the main low-pressure-refrigerant passage (120), and a second outdoor-side opening (152) that is connected to a point in the first branch high-pressure-refrigerant passage (111), the point being further from the main high-pressure-refrigerant passage (110) than the high-pressure flow control valve unit (200) is,
and the back surface (102) includes a first indoor-side opening (161) that is connected to the main high-pressure-refrigerant passage (110), and a second indoor-side opening (162) that is connected to a point in the first branch low-pressure-refrigerant passage (121), the point being further from the main low-pressure-refrigerant passage (120) than the low-pressure flow control valve unit (400) is, and
and **in that** the left surface (103) or the bottom surface (107) includes a refrigerant return opening (165) that is connected to a point in the second branch low-pressure-refrigerant passage (122), the point being further from the main low-pressure-refrigerant passage (120) than the low-pressure on-off valve unit (500) is.

4. The valve device (10, 10A, 10B) according to Claim 1,
wherein the valve body (100) includes front and back surfaces (101, 102) parallel to each other, left and right surfaces (103, 104) parallel to each other, and upper and bottom surfaces (107, 108) parallel to each other,
wherein the left surface (103) is at a right angle to the front surface (101),
wherein the upper surface (108) is at a right angle to the front surface (101) and is at a right angle to the left surface (103),
wherein the high-pressure flow control valve unit (200), the low-pressure flow control valve unit (400), and the low-pressure on-off valve unit (500) are disposed on the upper surface (108),
wherein the high-pressure on-off valve unit (300) is disposed on the left surface (103),
wherein the front surface (101) includes a first outdoor-side opening (151) that is connected to the main low-pressure-refrigerant passage (120), and a second outdoor-side opening (152) that is connected to a point in the first branch high-pressure-refrigerant passage (111), the point being further from the main high-pressure-refrigerant passage (110) than the high-pressure flow control valve unit (200) is,
wherein the back surface (102) includes a first indoor-side opening (161) that is connected to the main high-pressure-refrigerant passage (110), a second indoor-side opening (162) that is connected to a point in the first branch low-pressure-refrigerant passage (121), and a third indoor-side opening (163) that is connected to the second end of the pressure control refrigerant passage (130), the point being further from the main low-pressure-refrigerant passage (120)than the low-pressure flow control valve unit (400) is, and
wherein the left surface (103) or the bottom surface (107) includes a refrigerant return opening (165) that is connected to a point in the second branch low-pressure-refrigerant passage (122), the point being further from the main low-pressure-refrigerant passage (120) than the low-pressure on-off valve unit (500) is.

5. An air conditioning device (1, 1A) comprising:
a compressor (20);
an indoor condenser (30);
an outdoor heat exchanger (40);
an indoor evaporator (50);
an accumulator (80); and
the valve device (10, 10A, 10B) according to Claim 3,
wherein the compressor (20) includes a discharge port that is connected to an inlet of the indoor condenser (30),
wherein the compressor (20) further includes a suction port that is connected to an outlet of the accumulator (80),
wherein the first outdoor-side opening (151) is connected to an outlet of the outdoor heat exchanger (40),
wherein the second outdoor-side opening (152) is connected to an inlet of the outdoor heat exchanger (40),
wherein the first indoor-side opening (161) is connected to an outlet of the indoor condenser (30),
wherein the second indoor-side opening (162) is connected to an inlet of the indoor evaporator (50), and
wherein the refrigerant return opening (165) is connected to an inlet of the accumulator (80).

6. An air conditioning device comprising:
a compressor (20);
an indoor condenser (30);
an outdoor heat exchanger (40);
an indoor evaporator (50);
an accumulator (80); and
the valve device (10, 10A, 10B) according to Claim 4,
wherein the compressor (20) includes a discharge port that is connected to an inlet of the indoor condenser (30),
wherein the compressor (20) further includes a suction port that is connected to an outlet of the accumulator (80),
wherein the first outdoor-side opening (151) is connected to an outlet of the outdoor heat exchanger (40),
wherein the second outdoor-side opening (152) is connected to an inlet of the outdoor heat exchanger (40),
wherein the first indoor-side opening (161) is connected to an outlet of the indoor condenser (30),
wherein the second indoor-side opening (162) is connected to an inlet of the indoor evaporator (50),
wherein the third indoor-side opening (163) is connected to an outlet of the indoor evaporator (50), and
wherein the refrigerant return opening (165) is connected to an inlet of the accumulator (80).

## Patentansprüche

1. Ventilvorrichtung (10, 10A, 10B), umfassend:
einen Ventilkörper (100), der Kühlmittelkanäle enthält; und Ventileinheiten, die an dem Ventilkörper (100) montiert sind,
wobei die Kühlmittelkanäle enthalten:
einen Haupt-Hochdruck-Kühlmittelkanal (110), einen ersten Zweig-Hochdruck-Kühlmittelkanal (111), der mit dem Haupt-Hochdruck-Kühlmittelkanal (110) verbunden ist, einen zweiten Zweig-Hochdruck-Kühlmittelkanal (112), der mit dem Haupt-Hochdruck-Kühlmittelkanal (110) verbunden ist, einen Haupt-Niederdruck-Kühlmittelkanal (120), einen ersten Zweig-Niederdruck-Kühlmittelkanal (121), der mit dem Haupt-Niederdruck-Kühlmittelkanal (120) verbunden ist, und einen zweiten Zweig-Niederdruck-Kühlmittelkanal (122), der mit dem Haupt-Niederdruck-Kühlmittelkanal (120) verbunden ist,
wobei die Ventileinheiten enthalten:
eine Hochdruck-Strömungssteuerungsventileinheit (200), die konfiguriert ist, um eine Kanalfläche des ersten Zweig-Hochdruck-Kühlmittelkanals (111) zu ändern, eine Hochdruck-Ein-Aus-Ventileinheit (300), die konfiguriert ist, um den zweiten Zweig-Hochdruck-Kühlmittelkanal (112) zu öffnen und zu schließen, eine Niederdruck-Strömungssteuerungsventileinheit (400), die konfiguriert ist, um eine Kanalfläche des ersten Zweig-Niederdruck-Kühlmittelkanals (121) zu ändern, eine Niederdruck-Ein-Aus-Ventileinheit (500), die konfiguriert ist, um den zweiten Zweig-Niederdruck-Kühlmittelkanal (122) zu öffnen und zu schließen, und eine Rückschlagventileinheit (600), die an einem Punkt in dem ersten Zweig-Niederdruck-Kühlmittelkanal (121) angeordnet ist, welcher Punkt näher an dem Haupt-Niederdruck-Kühlmittelkanal (120) ist als die Niederdruck-Strömungssteuerungsventileinheit (400),
wobei die Rückschlagventileinheit (600) ermöglicht, dass Kühlmittel von dem Haupt-Niederdruck-Kühlmittelkanal (120) zu der Niederdruck-Strömungssteuerungsventileinheit (400) strömt und verhindert, dass Kühlmittel von der Niederdruck-Strömungssteuerungsventileinheit (400) zu dem Haupt-Niederdruck-Kühlmittelkanal (120) strömt,
wobei der zweite Zweig-Hochdruck-Kühlmittelkanal (112) den Haupt-Hochdruck-Kühlmittelkanal (110) mit einem Punkt in dem ersten Zweig-Niederdruck-Kühlmittelkanal (121) verbindet, welcher Punkt zwischen der Rückschlagventileinheit (600) und der Niederdruck-Strömungssteuerungsventileinheit (400) liegt,
**dadurch gekennzeichnet, dass**
die Kühlmittelkanäle einen Drucksteuerungskühlmittelkanal (130) enthalten,
und die Ventileinheiten eine Drucksteuerungsventileinheit (700) enthalten, die in dem Drucksteuerungskühlmittelkanal (130) angeordnet ist,
und der Drucksteuerungskühlmittelkanal (130) ein erstes Ende enthält, das mit einem Punkt in dem zweiten Zweig-Niederdruck-Kühlmittelkanal (122) verbunden ist, welcher Punkt weiter von dem Haupt-Niederdruck-Kühlmittelkanal (120) entfernt ist als die Niederdruck-Ein/Aus-Ventileinheit (500), und dadurch, dass die Drucksteuerungsventileinheit den Druck des Kühlmittels an einem zweiten Ende des Drucksteuerungskühlmittelkanals (130) auf einem eingestellten Wert oder höher hält.

2. Ventilvorrichtung (10, 10A, 10B) nach Anspruch 1, ferner umfassend:
einen Akkumulator (80), der an dem Ventilkörper (100) montiert ist und Kühlmittel in Gas- und Flüssigphasen trennt,
wobei der Akkumulator (80) einen Einlass enthält, der mit einem Punkt in dem zweiten Zweig-Niederdruck-Kühlmittelkanal (122) verbunden ist, welcher Punkt weiter von dem Haupt-Niederdruck-Kühlmittelkanal (120) entfernt ist als die Niederdruck-Ein/Aus-Ventileinheit (500).

3. Ventilvorrichtung (10, 10A, 10B), umfassend:
einen Ventilkörper (100), der Kühlmittelkanäle enthält; und
Ventileinheiten, die an dem Ventilkörper (100) montiert sind,
wobei die Kühlmittelkanäle enthalten:
einen Haupt-Hochdruck-Kühlmittelkanal (110), einen ersten Zweig-Hochdruck-Kühlmittelkanal (111), der mit dem Haupt-Hochdruck-Kühlmittelkanal (110) verbunden ist, einen zweiten Zweig-Hochdruck-Kühlmittelkanal (112), der mit dem Haupt-Hochdruck-Kühlmittelkanal (110) verbunden ist, einen Haupt-Niederdruck-Kühlmittelkanal (120), einen ersten Zweig-Niederdruck-Kühlmittelkanal (121), der mit dem Haupt-Niederdruck-Kühlmittelkanal (120) verbunden ist, und einen zweiten Zweig-Niederdruck-Kühlmittelkanal (122), der mit dem Haupt-Niederdruck-Kühlmittelkanal (120) verbunden ist,
wobei die Ventileinheiten enthalten:
eine Hochdruck-Strömungssteuerungsventileinheit (200), die konfiguriert ist, um eine Kanalfläche des ersten Zweig-Hochdruck-Kühlmittelkanals (111) zu ändern, eine Hochdruck-Ein-Aus-Ventileinheit (300), die konfiguriert ist, um den zweiten Zweig-Hochdruck-Kühlmittelkanal (112) zu öffnen und zu schließen, eine Niederdruck-Strömungssteuerungsventileinheit (400), die konfiguriert ist, um eine Kanalfläche des ersten Zweig-Niederdruck-Kühlmittelkanals (121) zu ändern, eine Niederdruck-Ein-Aus-Ventileinheit (500), die konfiguriert ist, um den zweiten Zweig-Niederdruck-Kühlmittelkanal (122) zu öffnen und zu schließen, und eine Rückschlagventileinheit (600), die an einem Punkt in dem ersten Zweig-Niederdruck-Kühlmittelkanal (121) angeordnet ist, welcher Punkt näher an dem Haupt-Niederdruck-Kühlmittelkanal (120) liegt als die Niederdruck-Strömungssteuerungsventileinheit (400),
wobei die Rückschlagventileinheit (600) ermöglicht, dass Kühlmittel von dem Haupt-Niederdruck-Kühlmittelkanal (120) zu der Niederdruck-Strömungssteuerungsventileinheit (400) strömt, und verhindert, dass Kühlmittel von der Niederdruck-Strömungssteuerungsventileinheit (400) zu dem Haupt-Niederdruck-Kühlmittelkanal (120) strömt,
wobei der zweite Zweig-Hochdruck-Kühlmittelkanal (112) den Haupt-Hochdruck-Kühlmittelkanal (110) mit einem Punkt in dem ersten Zweig-Niederdruck-Kühlmittelkanal (121) verbindet, welcher Punkt zwischen der Rückschlagventileinheit (600) und der Niederdruck-Strömungssteuerungsventileinheit (400) liegt,
wobei der Ventilkörper (100) vordere und hintere Flächen (101, 102), die parallel zueinander sind, linke und rechte Flächen (103, 104), die parallel zueinander sind, und obere und untere Flächen (107, 108), die parallel zueinander sind, enthält,
wobei die linke Fläche (103) in einem rechten Winkel zu der vorderen Fläche (101) liegt,
wobei die obere Fläche (108) in einem rechten Winkel zu der vorderen Fläche (101) liegt und in einem rechten Winkel zu der linken Fläche (103) liegt,
**dadurch gekennzeichnet, dass**
die Hochdruck-Strömungssteuerungsventileinheit (200), die Niederdruck-Strömungssteuerungsventileinheit (400) und die Niederdruck-Ein/Aus-Ventileinheit (500) auf der oberen Fläche (108) angeordnet sind,
und die Hochdruck-Ein/Aus-Ventileinheit (300) auf der linken Fläche (103) angeordnet ist,
und die vordere Fläche (101) eine erste außenseitige Öffnung (151), die mit dem Haupt-Niederdruck-Kühlmittelkanal (120) verbunden ist, und eine zweite außenseitige Öffnung (152) enthält, die mit einem Punkt in dem ersten Zweig-Hochdruck-Kühlmittelkanal (111) verbunden ist, welcher Punkt weiter von dem Haupt-Hochdruck-Kühlmittelkanal (110) entfernt ist als die Hochdruck-Strömungssteuerungsventileinheit (200),
und die hintere Fläche (102) eine erste innenseitige Öffnung (161), die mit dem Haupt-Hochdruck-Kühlmittelkanal (110) verbunden ist, und eine zweite innenseitige Öffnung (162) enthält, die mit einem Punkt in dem ersten Zweig-Niederdruck-Kühlmittelkanal (121) verbunden ist, welcher Punkt weiter von dem Haupt-Niederdruck-Kühlmittelkanal (120) entfernt ist als die Niederdruck-Strömungssteuerungsventileinheit (400), und dass
die linke Fläche (103) oder die untere Fläche (107) eine Kühlmittelrücklauföffnung (165) enthält, die mit einem Punkt in dem zweiten Zweig-Niederdruck-Kühlmittelkanal (122) verbunden ist, welcher Punkt weiter von dem Haupt-Niederdruck-Kühlmittelkanal (120) entfernt ist als die Niederdruck-Ein/Aus-Ventileinheit (500).

4. Ventilvorrichtung (10, 10A, 10B) nach Anspruch 1,
wobei der Ventilkörper (100) vordere und hintere Flächen (101, 102), die parallel zueinander sind, linke und rechte Flächen (103, 104), die parallel zueinander sind, und obere und untere Flächen (107, 108), die parallel zueinander sind, enthält,
wobei die linke Fläche (103) in einem rechten Winkel zu der vorderen Fläche (101) liegt,
wobei die obere Fläche (108) in einem rechten Winkel zu der vorderen Fläche (101) liegt und in einem rechten Winkel zu der linken Fläche (103) liegt,
wobei die Hochdruck-Strömungssteuerungsventileinheit (200), die Niederdruck-Strömungssteuerungsventileinheit (400) und die Niederdruck-Ein/Aus-Ventileinheit (500) auf der oberen Fläche (108) angeordnet sind,
wobei die Hochdruck-Ein/Aus-Ventileinheit (300) auf der linken Fläche (103) angeordnet ist,
wobei die vordere Fläche (101) eine erste außenseitige Öffnung (151), die mit dem Haupt-Niederdruck-Kühlmittelkanal (120) verbunden ist, und eine zweite außenseitige Öffnung (152) enthält, die mit einem Punkt in dem ersten Zweig-Hochdruck-Kühlmittelkanal (111) verbunden ist, welcher Punkt weiter von dem Haupt-Hochdruck-Kühlmittelkanal (110) entfernt ist als die Hochdruck-Strömungssteuerungsventileinheit (200),
wobei die hintere Fläche (102) eine erste innenseitige Öffnung (161), die mit dem Haupt-Hochdruck-Kühlmittelkanal (110) verbunden ist, eine zweite innenseitige Öffnung (162), die mit einem Punkt in dem ersten Zweig-Niederdruck-Kühlmittelkanal (121) verbunden ist, und eine dritte innenseitige Öffnung (163) enthält, die mit dem zweiten Ende des Drucksteuerungskühlmittelkanals (130) verbunden ist, welcher Punkt weiter von dem Haupt-Niederdruck-Kühlmittelkanal (120) entfernt ist als die Niederdruck-Strömungssteuerungsventileinheit (400), und
wobei die linke Fläche (103) oder die untere Fläche (107) eine Kühlmittelrücklauföffnung (165) enthält, die mit einem Punkt in dem zweiten Zweig-Niederdruck-Kühlmittelkanal (122) verbunden ist, welcher Punkt weiter von dem Haupt-Niederdruck-Kühlmittelkanal (120) entfernt ist als die Niederdruck-Ein/Aus-Ventileinheit (500).

5. Klimaanlagenvorrichtung (1, 1A), umfassend:
einen Kompressor (20);
einen Innenkondensator (30);
einen Außenwärmetauscher (40); einen Innenverdampfer (50); einen Akkumulator (80); und
die Ventilvorrichtung (10, 10A, 10B) nach Anspruch 3,
wobei der Kompressor (20) eine Auslassöffnung enthält, die mit einem Einlass des Innenkondensators (30) verbunden ist,
wobei der Kompressor (20) ferner eine Ansaugöffnung enthält, die mit einem Auslass des Akkumulators (80) verbunden ist,
wobei die erste außenseitige Öffnung (151) mit einem Auslass des Außenwärmetauschers (40) verbunden ist,
wobei die zweite außenseitige Öffnung (152) mit einem Einlass des Außenwärmetauschers (40) verbunden ist,
wobei die erste innenseitige Öffnung (161) mit einem Auslass des Innenkondensators (30) verbunden ist,
wobei die zweite innenseitige Öffnung (162) mit einem Einlass des Innenverdampfers (50) verbunden ist, und
wobei die Kühlmittelrücklauföffnung (165) mit einem Einlass des Akkumulators (80) verbunden ist.

6. Klimaanlagenvorrichtung, umfassend:
einen Kompressor (20);
einen Innenkondensator (30);
einen Außenwärmetauscher (40);
einen Innenverdampfer (50);
einen Akkumulator (80); und
die Ventilvorrichtung (10, 10A, 10B) nach Anspruch 4,
wobei der Kompressor (20) eine Auslassöffnung enthält, die mit einem Einlass des Innenkondensators (30) verbunden ist,
wobei der Kompressor (20) ferner eine Ansaugöffnung enthält, die mit einem Auslass des Akkumulators (80) verbunden ist,
wobei die erste außenseitige Öffnung (151) mit einem Auslass des Außenwärmetauschers (40) verbunden ist,
wobei die zweite außenseitige Öffnung (152) mit einem Einlass des Außenwärmetauschers (40) verbunden ist,
wobei die erste innenseitige Öffnung (161) mit einem Auslass des Innenkondensators (30) verbunden ist,
wobei die zweite innenseitige Öffnung (162) mit einem Einlass des Innenverdampfers (50) verbunden ist,
wobei die dritte innenseitige Öffnung (163) mit einem Auslass des Innenverdampfers (50) verbunden ist, und
wobei die Kühlmittelrücklauföffnung (165) mit einem Einlass des Akkumulators (80) verbunden ist.

## Revendications

1. Dispositif de soupape (10, 10A, 10B) comportant :
un corps de soupape (100) incluant des passages de fluide frigorigène ; et
des unités de soupape montées sur le corps de soupape (100),
dans lequel les passages de fluide frigorigène incluent :
un passage principal de fluide frigorigène à haute pression (110), un premier passage de bifurcation de fluide frigorigène à haute pression (111) qui est relié au passage principal de fluide frigorigène à haute pression (110), un second passage de bifurcation de fluide frigorigène à haute pression (112) qui est relié au passage principal de fluide frigorigène à haute pression (110), un passage principal de fluide frigorigène à basse pression (120), un premier passage de bifurcation de fluide frigorigène à basse pression (121) qui est relié au passage principal de fluide frigorigène à basse pression (120), et un second passage de bifurcation de fluide frigorigène à basse pression (122) qui est relié au passage principal de fluide frigorigène à basse pression (120),
dans lequel les unités de soupape incluent :
une unité de soupape de régulation de débit à haute pression (200) configurée pour changer une aire de passage du premier passage de bifurcation de fluide frigorigène à haute pression (111), une unité de soupape d'ouverture-fermeture à haute pression (300) configurée pour ouvrir et fermer le second passage de bifurcation de fluide frigorigène à haute pression (112), une unité de soupape de régulation de débit à basse pression (400) configurée pour changer une aire de passage du premier passage de bifurcation de fluide frigorigène à basse pression (121), une unité de soupape d'ouverture-fermeture à basse pression (500) configurée pour ouvrir et fermer le second passage de bifurcation de fluide frigorigène à basse pression (122), et une unité de clapet anti-retour (600) qui est disposée à un point situé dans le premier passage de bifurcation de fluide frigorigène à basse pression (121), le point étant plus proche du passage principal de fluide frigorigène à basse pression (120) que l'unité de soupape de régulation de débit à basse pression (400) ne l'est,
dans lequel l'unité de clapet anti-retour (600) permet au fluide frigorigène de s'écouler à partir du passage principal de fluide frigorigène à basse pression (120) jusqu'à l'unité de soupape de régulation de débit à basse pression (400) et empêche le fluide frigorigène de s'écouler à partir de l'unité de soupape de régulation de débit à basse pression (400) jusqu'au passage principal de fluide frigorigène à basse pression (120),
dans lequel le second passage de bifurcation de fluide frigorigène à haute pression (112) relie le passage principal de fluide frigorigène à haute pression (110) à un point situé dans le premier passage de bifurcation de fluide frigorigène à basse pression (121), le point étant situé entre l'unité de clapet anti-retour (600) et l'unité de soupape de régulation de débit à basse pression (400),
**caractérisé en ce que** les passages de fluide frigorigène incluent un passage de fluide frigorigène de commande de pression (130),
et les unités de soupape incluent une unité de soupape de commande de pression (700) qui est disposée dans le passage de fluide frigorigène de commande de pression (130),
et le passage de fluide frigorigène de commande de pression (130) inclut une première extrémité qui est reliée à un point situé dans le second passage de bifurcation de fluide frigorigène à basse pression (122), le point étant plus éloigné du passage principal de fluide frigorigène à basse pression (120) que l'unité de soupape d'ouverture-fermeture à basse pression (500) ne l'est, et
**en ce que** l'unité de soupape de commande de pression maintient une pression du fluide frigorigène à une seconde extrémité du passage de fluide frigorigène de commande de pression (130) à une valeur de consigne ou à une valeur plus élevée.

2. Dispositif de soupape (10, 10A, 10B) selon la revendication 1, comportant en outre :
un accumulateur (80) qui est monté sur le corps de soupape (100) et sépare le fluide frigorigène en phases gazeuse et liquide,
dans lequel l'accumulateur (80) inclut une entrée qui est reliée à un point situé dans le second passage de bifurcation de fluide frigorigène à basse pression (122), le point étant plus éloigné du passage principal de fluide frigorigène à basse pression (120) que l'unité de soupape d'ouverture-fermeture à basse pression (500) ne l'est.

3. Dispositif de soupape (10, 10A, 10B) comportant :
un corps de soupape (100) incluant des passages de fluide frigorigène ; et
des unités de soupape montées sur le corps de soupape (100),
dans lequel les passages de fluide frigorigène incluent :
un passage principal de fluide frigorigène à haute pression (110), un premier passage de bifurcation de fluide frigorigène à haute pression (111) qui est relié au passage principal de fluide frigorigène à haute pression (110), un second passage de bifurcation de fluide frigorigène à haute pression (112) qui est relié au passage principal de fluide frigorigène à haute pression (110), un passage principal de fluide frigorigène à basse pression (120), un premier passage de bifurcation de fluide frigorigène à basse pression (121) qui est relié au passage principal de fluide frigorigène à basse pression (120), et un second passage de bifurcation de fluide frigorigène à basse pression (122) qui est relié au passage principal de fluide frigorigène à basse pression (120),
dans lequel les unités de soupape incluent :
une unité de soupape de régulation de débit à haute pression (200) configurée pour changer une aire de passage du premier passage de bifurcation de fluide frigorigène à haute pression (111), une unité de soupape d'ouverture-fermeture à haute pression (300) configurée pour ouvrir et fermer le second passage de bifurcation de fluide frigorigène à haute pression (112), une unité de soupape de régulation de débit à basse pression (400) configurée pour changer une aire de passage du premier passage de bifurcation de fluide frigorigène à basse pression (121), une unité de soupape d'ouverture-fermeture à basse pression (500) configurée pour ouvrir et fermer le second passage de bifurcation de fluide frigorigène à basse pression (122), et une unité de clapet anti-retour (600) qui est disposée à un point situé dans le premier passage de bifurcation de fluide frigorigène à basse pression (121), le point étant plus proche du passage principal de fluide frigorigène à basse pression (120) que l'unité de soupape de régulation de débit à basse pression (400) ne l'est,
dans lequel l'unité de clapet anti-retour (600) permet au fluide frigorigène de s'écouler à partir du passage principal de fluide frigorigène à basse pression (120) jusqu'à l'unité de soupape de régulation de débit à basse pression (400) et empêche le fluide frigorigène de s'écouler à partir de l'unité de soupape de régulation de débit à basse pression (400) jusqu'au passage principal de fluide frigorigène à basse pression (120),
dans lequel le second passage de bifurcation de fluide frigorigène à haute pression (112) relie le passage principal de fluide frigorigène à haute pression (110) à un point situé dans le premier passage de bifurcation de fluide frigorigène à basse pression (121), le point étant situé entre l'unité de clapet anti-retour (600) et l'unité de soupape de régulation de débit à basse pression (400),
dans lequel le corps de soupape (100) inclut des surfaces avant et arrière (101, 102) parallèles l'une à l'autre, des surfaces gauche et droite (103, 104) parallèles l'une à l'autre, et des surfaces supérieure et inférieure (107, 108) parallèles l'une à l'autre,
dans lequel la surface gauche (103) est à un angle droit par rapport à la surface avant (101),
la surface supérieure (108) est à un angle droit par rapport à la surface avant (101) et est à un angle droit par rapport à la surface gauche (103),
**caractérisé en ce que** l'unité de soupape de régulation de débit à haute pression (200), l'unité de soupape de régulation de débit à basse pression (400) et l'unité de soupape d'ouverture-fermeture à basse pression (500) sont disposées sur la surface supérieure (108),
et l'unité de soupape d'ouverture-fermeture à haute pression (300) est disposée sur la surface gauche (103),
et la surface avant (101) inclut une première ouverture côté extérieur (151) qui est reliée au passage principal de fluide frigorigène à basse pression (120), et une seconde ouverture côté extérieur (152) qui est reliée à un point situé dans le premier passage de bifurcation de fluide frigorigène à haute pression (111), le point étant plus éloigné du passage principal de fluide frigorigène à haute pression (110) que l'unité de soupape de régulation de débit à haute pression (200) ne l'est,
et la surface arrière (102) inclut une première ouverture côté intérieur (161) qui est reliée au passage principal de fluide frigorigène à haute pression (110), et une seconde ouverture côté intérieur (162) qui est reliée à un point situé dans le premier passage de bifurcation de fluide frigorigène à basse pression (121), le point étant plus éloigné du passage principal de fluide frigorigène à basse pression (120) que l'unité de soupape de régulation de débit à basse pression (400) ne l'est, et
**en ce que** la surface gauche (103) ou la surface inférieure (107) inclut une ouverture de retour de fluide frigorigène (165) qui est reliée à un point situé dans le second passage de bifurcation de fluide frigorigène à basse pression (122), le point étant plus éloigné du passage principal de fluide frigorigène à basse pression (120) que l'unité de soupape d'ouverture-fermeture à basse pression (500) ne l'est.

4. Dispositif de soupape (10, 10A, 10B) selon la revendication 1,
dans lequel le corps de soupape (100) inclut des surfaces avant et arrière (101, 102) parallèles l'une à l'autre, des surfaces gauche et droite (103, 104) parallèles l'une à l'autre, et des surfaces supérieure et inférieure (107, 108) parallèles l'une à l'autre,
dans lequel la surface gauche (103) est à un angle droit par rapport à la surface avant (101),
dans lequel la surface supérieure (108) est à un angle droit par rapport à la surface avant (101) et à un angle droit par rapport à la surface gauche (103),
dans lequel l'unité de soupape de régulation de débit à haute pression (200), l'unité de soupape de régulation de débit à basse pression (400) et l'unité de soupape d'ouverture-fermeture à basse pression (500) sont disposées sur la surface supérieure (108),
dans lequel l'unité de soupape d'ouverture-fermeture à haute pression (300) est disposée sur la surface gauche (103),
dans lequel la surface avant (101) inclut une première ouverture côté extérieur (151) qui est reliée au passage principal de fluide frigorigène à basse pression (120), et une seconde ouverture côté extérieur (152) qui est reliée à un point situé dans le premier passage de bifurcation de fluide frigorigène à haute pression (111), le point étant plus éloigné du passage principal de fluide frigorigène à haute pression (110) que l'unité de soupape de régulation de débit à haute pression (200) ne l'est,
dans lequel la surface arrière (102) inclut une première ouverture côté intérieur (161) qui est reliée au passage principal de fluide frigorigène à haute pression (110), une deuxième ouverture côté intérieur (162) qui est reliée à un point situé dans le premier passage de bifurcation de fluide frigorigène à basse pression (121), et une troisième ouverture côté intérieur (163) qui est reliée à la seconde extrémité du passage de fluide frigorigène de commande de pression (130), le point étant plus éloigné du passage principal de fluide frigorigène à basse pression (120) que l'unité de régulation de débit à basse pression (400) ne l'est, et
dans lequel la surface gauche (103) ou la surface inférieure (107) inclut une ouverture de retour de fluide frigorigène (165) qui est reliée à un point situé dans le second passage de bifurcation de fluide frigorigène à basse pression (122), le point étant plus éloigné du passage principal de fluide frigorigène à basse pression (120) que l'unité de soupape d'ouverture-fermeture à basse pression (500) ne l'est.

5. Dispositif de climatisation (1, 1A) comportant :
un compresseur (20) ;
un condenseur intérieur (30) ;
un échangeur de chaleur extérieur (40) ;
un évaporateur intérieur (50) ;
un accumulateur (80) ; et
le dispositif de soupape (10, 10A, 10B) selon la revendication 3,
dans lequel le compresseur (20) inclut un orifice de refoulement qui est relié à une entrée du condenseur intérieur (30),
dans lequel le compresseur (20) inclut en outre un orifice d'aspiration qui est relié à une sortie de l'accumulateur (80),
dans lequel la première ouverture côté extérieur (151) est reliée à une sortie de l'échangeur de chaleur extérieur (40),
dans lequel la seconde ouverture côté extérieur (152) est reliée à une entrée de l'échangeur de chaleur extérieur (40),
dans lequel la première ouverture côté intérieur (161) est reliée à une sortie du condenseur intérieur (30),
dans lequel la seconde ouverture côté intérieur (162) est reliée à une entrée de l'évaporateur intérieur (50), et
dans lequel l'ouverture de retour de fluide frigorigène (165) est reliée à une entrée de l'accumulateur (80).

6. Dispositif de climatisation comportant :
un compresseur (20) ;
un condenseur intérieur (30) ;
un échangeur de chaleur extérieur (40) ;
un évaporateur intérieur (50) ;
un accumulateur (80) ; et
le dispositif de soupape (10, 10A, 10B) selon la revendication 4,
dans lequel le compresseur (20) inclut un orifice de refoulement qui est relié à une entrée du condenseur intérieur (30),
dans lequel le compresseur (20) inclut en outre un orifice d'aspiration qui est relié à une sortie de l'accumulateur (80),
dans lequel la première ouverture côté extérieur (151) est reliée à une sortie de l'échangeur de chaleur extérieur (40),
dans lequel la seconde ouverture côté extérieur (152) est reliée à une entrée de l'échangeur de chaleur extérieur (40),
dans lequel la première ouverture côté intérieur (161) est reliée à une sortie du condenseur intérieur (30),
dans lequel la deuxième ouverture côté intérieur (162) est reliée à une entrée de l'évaporateur intérieur (50),
dans lequel la troisième ouverture côté intérieur (163) est reliée à une sortie de l'évaporateur intérieur (50), et
dans lequel l'ouverture de retour de fluide frigorigène (165) est reliée à une entrée de l'accumulateur (80).
